(19) Europäisches Patentamt
European Patent Office
Office européen des brevets

(11) EP 3 385 345 B1

(12) **EUROPEAN PATENT SPECIFICATION**

(45) Date of publication and mention of the grant of the patent:
**31.05.2023 Bulletin 2023/22**

(21) Application number: **16870705.7**

(22) Date of filing: **30.11.2016**

(51) International Patent Classification (IPC):
***C09D 143/04*** *(2006.01)* ***B05D 5/00*** *(2006.01)*
***B05D 7/24*** *(2006.01)* ***B32B 27/30*** *(2006.01)*
***C09D 5/16*** *(2006.01)*

(52) Cooperative Patent Classification (CPC):
(C-Sets available)
**B05D 5/00; B05D 7/24; B32B 27/30;**
**C08F 230/085; C09D 5/165; C09D 7/61;**
**C09D 7/69; C09D 143/04** (Cont.)

(86) International application number:
**PCT/JP2016/085531**

(87) International publication number:
**WO 2017/094768 (08.06.2017 Gazette 2017/23)**

(54) **ANTIFOULING COATING COMPOSITION, ANTIFOULING COATING FILM, ANTIFOULING BASE, AND METHOD OF MANUFACTURING ANTIFOULING BASE**

ANTIFOULING-BESCHICHTUNGSZUSAMMENSETZUNG, ANTIFOULING-BESCHICHTUNGSFILM, ANTIFOULING-BASIS UND VERFAHREN ZUR HERSTELLUNG EINER ANTIFOULING-BASIS

COMPOSITION DE REVÊTEMENT ANTISALISSURE, FILM DE REVÊTEMENT ANTISALISSURE, BASE ANTISALISSURE, ET PROCÉDÉ DE FABRICATION DE BASE ANTISALISSURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2015 JP 2015233405**

(43) Date of publication of application:
**10.10.2018 Bulletin 2018/41**

(73) Proprietor: **Chugoku Marine Paints, Ltd.**
**Hiroshima 739-0652 (JP)**

(72) Inventors:
- **TANAKA, Hideyuki**
  **Hiroshima 739-0652 (JP)**
- **NIIMOTO, Jyunji**
  **Hiroshima 739-0652 (JP)**
- **FUJIKI, Yutaka**
  **Hiroshima 739-0652 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 161 316**
**EP-A1- 2 360 213**
**EP-A1- 2 990 450**
**EP-A1- 3 299 427**
**WO-A1-2009/001619**
**WO-A1-2009/031509**
**WO-A1-2009/066632**
**WO-A1-2014/175140**
**JP-A- 2005 082 725**
**JP-A- 2010 084 099**
**JP-A- 2010 144 106**
**JP-A- 2011 026 357**
**US-B1- 6 458 878**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 230/085, C08F 220/281, C08F 220/14, C08F 220/1804;**
**C09D 143/04, C08K 5/09, C08K 3/105**

## Description

TECHNICAL FIELD

The present invention relates to an antifouling coating composition and use applications thereof. More particularly, the invention relates to an antifouling coating composition capable of forming an antifouling coating film with good adhesion on, for example, an epoxy resin-based coating film, to an antifouling coating film formed from the antifouling coating composition, to an antifouling substrate, and to a method for producing antifouling substrate.

BACKGROUND ART

The surface of substrates that are submerged in water for a long period of time, such as ships and underwater structures, is prone to be fouled by various aquatic organisms including animals such as oysters, mussels and barnacles, plants such as seaweeds, and bacteria. The propagation of these aquatic organisms on the substrate surface leads to various problems. In the case of a substrate that is, for example, a ship, the surface roughness from the draft line to the bottom of the ship is increased to give rise to a decrease in ship speed and an increase in fuel consumption. In the case where the substrate is seawater inlet and outlet pipes in facilities such as thermal power plants and nuclear power plants, the circulation system can be hampered by clogging of pipes through which seawater (cooling water) is supplied and discharged, or by a decrease in flow speed.

To address such problems, research and development are underway of antifouling paints (antifouling coating compositions) that are applied to various substrates to prevent the substrates from the attachment of aquatic organisms.

Such substrates as ships and underwater structures are most often made of metal materials such as steel, and are therefore coated with epoxy resin-based anticorrosive paints to prevent corrosion by seawater. Further, such coating films are overcoated with antifouling paints to prevent the attachment of aquatic organisms. Because an antifouling paint does not adhere well to an epoxy resin-based anticorrosive coating film, a vinyl resin-based binder is applied first and the antifouling paint is applied thereon.

Antifouling coating compositions which contain a hydrolyzable resin as a resin component (a binder component) are generally known. Typical examples of such compositions that have been developed are antifouling coating compositions that include a coating composition which includes a hydrolyzable resin containing a triorganosilyl group or a metal such as zinc, in combination with cuprous oxide. Coating compositions of this type are applied to parts such as bottoms of ships for the purpose of preventing the attachment of aquatic organisms. Patent Literatures 1 to 7 discussed below disclose antifouling coating compositions that combine a hydrolyzable resin and cuprous oxide, and techniques associated with overcoating of epoxy resin-based anticorrosive coating films with such compositions and VOC reduction.

Patent Literature 1 discloses a ship painting method in which the entirety of outside shell of a ship is coated with a single kind of a tar-free epoxy resin heavy-duty anticorrosive paint as a primer, and an organotin-free hydrolyzable antifouling paint is applied to the primer coating film in (a) a ship bottom portion or in (a) a ship bottom portion and (b) a waterline portion.

Patent Literature 2 discloses an antifouling coating composition that contains a polymer with a number average molecular weight of 1,000 to 20,000 obtained by polymerizing a polymerizable unsaturated carboxylic acid triorganosilyl, and a zinc salt of a rosin or a zinc salt of a rosin derivative. A dependent claim describes the average particle size of cuprous oxide.

Patent Literature 3 discloses an antifouling coating composition which includes a hydrolyzable resin that is a copolymer obtained from a triorganosilyl methacrylate ester monomer (a) and a methoxyalkyl methacrylate ester monomer (b) wherein the content of (a) + (b) is not less than 80 wt%, and a rosin copper salt. Further, Examples describe a variety of data of compositions that contain these components in combination with cuprous oxide having an average particle size of not less than 6 $\mu$m.

Patent Literature 4 discloses an antifouling coating composition characterized by containing a polymerizable unsaturated carboxylic acid zinc salt-based or copper salt-based copolymer, and copper and/or an inorganic copper compound having an average particle size of 6 to 50 $\mu$m.

Patent Literature 5 pertains to a copolymer of triisopropylsilyl acrylate and triisopropylsilyl methacrylate, and describes Examples which evaluate the adhesion with respect to epoxy binder coating films.

Patent Literature 6 pertains to an antifouling coating composition that contains a hydrolyzable resin including a silyl ester copolymer, copper and/or an inorganic copper compound, and zinc oxide. Cuprous oxide with a particle size of 6 $\mu$m or more is disclosed as the inorganic copper compound.

Patent Literature 7 pertains to an antifouling paint with a VOC of less than 400 g/L which includes a silyl ester copolymer, and discloses an antifouling coating composition in which the molecular weight of the silyl ester copolymer is specified so as to reduce the viscosity and thereby to reduce the VOC. Patent Literature 8 describes an antifouling coating composition and a method for producing the same. The antifouling coating composition comprises: (1) a triisopropylsilyl (meth)acrylate copolymer of (a) 30 to 65 weight! of triisopropylsilyl (meth) acrylate, (b) 5 to 50 weight! of methyl methacrylate, and (c) 0 to 60 weight% of another (meth)acry | ic ester, the triisopropylsilyl (meth)acrylate copolymer having a glass transition temperature of 20 to 70° C and a number average molecular weight of 5,000 to 30,000; (2) at least one salt selected from the group consisting of rosin zinc salts, zinc salts of rosin derivatives, rosin copper salts and copper salts of rosin derivatives; and (3) a cuprous oxide, the antifouling coating composition being substantially free from rosins and rosin derivatives that contain one or more free carboxyl groups.

Patent Literature 9 describes a silyl (meth)acrylate copolymer, an antifouling paint composition comprising the copolymer, a coating film formed from the paint composition, a hull with the coating film and an antifouling method using the paint composition. The silyl (meth)acrylate copolymer comprises 20 to 80 % by weight of specific silyl (meth) acrylate constituent units, 0.01 to 40 % by weight of specific acrylic unsaturated monomer constituent units and 5 to 79. 9 % by weight of specific unsaturated monomer constituent units other than the aforementioned constituent units.

Patent Literature 10 representing prior art according to Article 54 (3) EPC describes an antifouling coating composition comprising a silyl ester (co)polymer and medetomidine, the silyl ester (co)polymer including structural units derived from a monomer represented by the following general formula:

$$R^1\text{-}CH=C(CH_3)\text{-}COO\text{-}(SiR^2R^3O)_n\text{-}SiR^4R^5R^6$$

wherein, in the formula, $R^2$, $R^3$, $R^4$, $R^5$ and $R^6$ are each independently a $C_{1-20}$ monovalent organic group optionally having a heteroatom, $R^1$ is a hydrogen atom or $R^7$-O-C=O (wherein $R^7$ is a hydrogen atom, a $C_{1-20}$ monovalent organic group optionally having a heteroatom, or a silyl group represented by $R^8R^9R^{10}Si$ (wherein $R^8$, $R^9$ and $R^{10}$ are each independently a $C_{1-20}$ monovalent organic group optionally having a heteroatom)), and n is 0 or an integer of 1 or greater.

Patent Literature 11 describes a copolymer for an antifouling coating composition, comprising a copolymer having, on a side chain, a group represented by the chemical formula (1) and having, on terminal, at least one of a group represented by the chemical formula (2) and a group represented by the chemical formula (3), wherein chemical formula (1) is

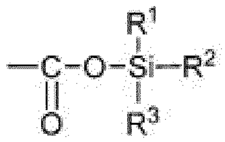 (1)

wherein $R^1$, $R^2$ and $R^3$ are the same or different from each other and each represents a $C_{3-6}$ alkyl group branched at an $\alpha$-position or a phenyl group; chemical formula (2) is

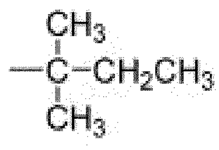 (2)

;

and chemical formula (3) is

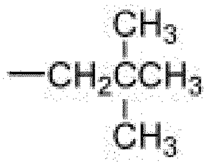 (3)

.

Patent Literature 12 describes an antifouling coating composition which comprises, as a vehicle, a copolymer obtained from a monomer mixture comprising 30 to 60 parts by weight of at least one monomer selected from methacrylic acid triorganic silicon ester monomers represented by the following formula

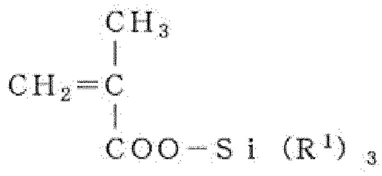

wherein $R^1$ is a $C_{3-6}$ branched alkyl group or a phenyl group; 30 to 60 parts by weight of at least one monomer selected from alkoxyalkyl methacrylate monomers represented by the following formula

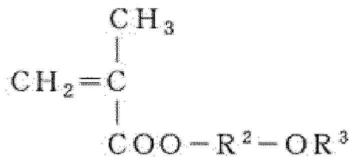

wherein $R^2$ is a $C_{2-4}$ alkylene group and $R^3$ is a methyl group or an ethyl group; and 0 to 40 parts by weight of at least one monomer selected from copolymerizable ethylenically unsaturated monomers.

CITATION LIST

PATENT LITERATURE

Patent Literature 1: JP-A-H11-333374
Patent Literature 2: JP-A-2011-26357
Patent Literature 3: JP-A-2010-144106
Patent Literature 4: JP-A-2000-234072
Patent Literature 5: WO 2013/07580
Patent Literature 6: WO 2009/031509
Patent Literature 7: JP-A-2009-513736
Patent Literature 8: EP 2 161 316 A1
Patent Literature 9: US 6 458 878 B1
Patent Literature 10: EP 3 299 427 A1
Patent Literature 11: WO 2014/175140 A1
Patent Literature 12: JP 2005/082725 A

SUMMARY OF INVENTION

TECHNICAL PROBLEM

In Patent Literature 1, a tar-free epoxy resin heavy-duty anticorrosive paint is applied to a waterline portion and a bottom portion of outside shell of a ship to form a primer layer, a tin-free hydrolyzable antifouling paint is applied onto the primer layer after an interval of 10 days, and the adhesion after 180 days of immersion at ordinary temperature is examined. To ensure adhesion, this antifouling paint contains a tributylsilyl acrylate resin in combination with an acrylic styrene-based resin and a chlorinated paraffin as a plasticizer. This chemical composition leads to low coating film consumption properties and may allow fouling to occur during long periods of immersion. Further, this literature does not specify the particle size of cuprous oxide used therein, and has no technical idea of obtaining adhesion by the use of cuprous oxide having a specific particle size.

In Patent Literature 2, tests are conducted with respect to compositions including a copolymer of triisopropylsilyl methacrylate and 2-methoxyethyl (meth)acrylate, and a rosin zinc salt, and further including, in Examples, cuprous oxide having an average particle size of 6 µm to 19 µm. The test plates are fabricated by applying such a composition onto a one-component vinyl-based A/C in order to ensure adhesion when submerged in seawater.

Examples described in Patent Literature 3 disclose antifouling coating compositions containing cuprous oxide with an average particle size of 6 µm to 19 µm. The antifouling paints are exclusively applied onto coating films of vinyl-based anticorrosive paints, and no adhesion tests are carried out.

Because rosin metal salts are essential components in Patent Literatures 2 and 3, the coating films are hard and have a high cohesive force inside the coating films, and therefore will not exhibit sufficient adhesion on epoxy resin-based anticorrosive coating films that are cured by reaction.

Patent Literature 4 describes static antifouling properties and consumption properties. However, the technique does not pertain to silyl polymers and does not involve rosins, giving rise to a risk that antifouling properties may not last long. Further, the paints are exclusively applied to vinyl chloride plates, and no data is described regarding the application of the paints to epoxy coating systems or the adhesion thereof.

In Patent Literature 5, a copolymer of triisopropylsilyl acrylate and triisopropylsilyl methacrylate is combined with fine cuprous oxide (average particle size 3 μm), and an epoxy anticorrosive coating film is coated with an antifouling paint after 1 day of drying indoors, and is subjected to artificial seawater under accelerated conditions of 50°C for 5 months, the adhesion data being described. In this case, because the cuprous oxide used is as small as less than 4 μm in diameter, peeling is likely to occur when coating application is carried out after the epoxy anticorrosive coating film is exposed outdoors for several days. This fact requires that coating applications take place at a short interval.

Patent Literature 6 describes that an epoxy coating film is dried for 1 day and is overcoated with an antifouling paint which contains cuprous oxide with a particle size of not less than 6 μm and a chlorinated paraffin-based or terpene-based plasticizer, and static antifouling properties are tested. In this test, the adhesion with respect to the epoxy coating film is enhanced not by combination with a rosin or a monocarboxylic acid but by the use of a plasticizer together. Further, the interval between the coating application of the epoxy paint and that of the antifouling paint is as short as 1 day, and is not practical and is hardly applicable to actual shipbuilding processes. Furthermore, Patent Literature 6 describes only the testing of static antifouling properties, and is silent with respect to adhesion tests such as knife cut test.

Patent Literature 7 pertains to an antifouling paint with a VOC of less than 400 g/L which includes a silyl ester copolymer, and is aimed at reducing the VOC by specifying the molecular weight of the silyl ester copolymer so as to reduce the viscosity.

Although this literature discloses compositions that combine triisopropylsilyl acrylate with methoxyethyl acrylate and methyl methacrylate, there is no description regarding the type of cuprous oxide and the adhesion of the antifouling coating composition with respect to an epoxy coating film.

As discussed above, when an epoxy anticorrosive coating film for the protection of a steel substrate from seawater corrosion is to be overcoated with a hydrolyzable antifouling paint, a conventional approach to ensuring adhesion is generally to apply a one-component vinyl-based binder coating before the hydrolyzable antifouling paint.

However, the vinyl resin that constitutes such a one-component vinyl-based binder coating is of high molecular weight and is difficult to form a paint unless dissolved in a large amount of an organic solvent. Consequently, the paint generates large amounts of VOC and causes air pollution problems . Further, the application of a vinyl resin-based binder coating onto an epoxy coating film disadvantageously adds a step.

When the coating application of an epoxy anticorrosive coating film and that of a hydrolyzable antifouling paint thereon take place at a short interval (for example, 1 day), a certain level of adhesion has been successfully ensured even in the absence of a vinyl resin-based binder coating. For shipbuilding process reasons, however, an interval of several days is virtually necessary between the coating application of an epoxy anticorrosive paint and that of an antifouling paint. Thus, there has been a demand that the coating applications can be made at an extended interval of time. Further, in recent ship repairing, the period between each repair has become long, and consequently there has been also a demand that good adhesion be maintained over an extended period of time.

From the foregoing, an object of the present invention is to provide an antifouling coating composition that can maintain good antifouling performance, attains a reduction in VOC in the paint, and can exhibit adhesion with respect to an epoxy resin-based coating film stably over a long period of time.

Other objects of the invention are to provide an antifouling substrate that has an antifouling coating film formed using the above coating composition and exhibiting excellent long-term antifouling properties, long-term water resistance and long-term adhesion, and to provide a method for producing antifouling substrates having excellent long-term antifouling properties, long-term water resistance and long-term adhesion.

SOLUTION TO PROBLEM

In light of the circumstances described above, the present inventors have found that in a hydrolyzable antifouling paint including a rosin and/or a monocarboxylic acid compound, the incorporation of a silyl resin having a specific chemical composition and cuprous oxide having a specific particle size allows the VOC of the paint to be reduced and allows the paint to attain excellent adhesion with respect to an epoxy resin-based anticorrosive coating film.

Specifically, the present inventors have developed an antifouling coating composition which includes in combination cuprous oxide having a specific particle size and a specific silyl methacrylic resin and which thereby can maintain good antifouling performance, attains a reduction in VOC in the paint, and can exhibit adhesion with respect to an epoxy resin-based coating film stably over a long period of time.

Thus, the present invention pertains to the following.

[1] An antifouling coating composition including (A) a hydrolyzable copolymer including a structural unit (1) derived from triisopropylsilyl methacrylate (i), a structural unit (2) derived from 2-methoxyethyl (meth)acrylate (ii), and a structural unit (3) derived from a polymerizable monomer (iii) having a polymerizable double bond (with the proviso that triisopropylsilyl methacrylate and 2-methoxyethyl (meth)acrylate are excluded), (B) cuprous oxide having an average particle size of 4.5 to 50 μm, and (C) a rosin and/or a monocarboxylic acid compound, wherein the rosin is selected from gum rosin, wood rosin, tall oil rosin, hydrogenated rosins and disproportionated rosins, the monocarboxylic acid compound is selected from aliphatic or alicyclic monocarboxylic acids, the ratio (WA/WC) of the content (WA) of the hydrolyzable copolymer (A) to the content (WC) of the rosin and/or the monocarboxylic acid compound (C) is 95/5 to 40/60 by mass, the hydrolyzable copolymer (A) is present in an amount of 7 to 30 mass% of the content of solids of the antifouling coating composition taken as 100 mass%, and the antifouling coating composition does not comprise medetomidine.

[2] The antifouling coating composition described in [1], wherein the ratio (WA/WC) of the content (WA) of the hydrolyzable copolymer (A) to the content (WC) of the rosin and/or the monocarboxylic acid compound (C) is 99.9/0.1 to 30/70 by mass.

[3] The antifouling coating composition described in [1] or [2], further including at least one selected from the group consisting of an inorganic copper compound (D) except the cuprous oxide (B), a color pigment (F), an extender pigment (G), a pigment dispersant (H), a plasticizer (I), an anti-sagging agent (J), an anti-settling agent (K), a dehydrating agent (L) and a solvent (M).

[4] The antifouling coating composition described in any one of [1] to [3], wherein the content of volatile organic compound (VOC) is less than 400 g/L.

[5] An antifouling coating film formed from the antifouling coating composition described in any one of [1] to [4].

[6] An antifouling substrate including a stack including a substrate and the antifouling coating film described in [5] .

[7] The antifouling substrate described in [6], which is placed in contact with seawater or freshwater.

[8] The antifouling substrate described in [6] or [7], wherein the substrate is at least one selected from the group consisting of underwater structures, ships and fishing gears.

[9] A method for producing an antifouling substrate, including curing the antifouling coating composition described in any one of [1] to [4] on a surface of a substrate to form an antifouling coating film.

[10] A method for producing an antifouling coating composition, including mixing together (A) a hydrolyzable copolymer including a structural unit (1) derived from triisopropylsilyl methacrylate (i), a structural unit (2) derived from 2-methoxyethyl (meth) acrylate (ii), and a structural unit (3) derived from a polymerizable monomer (iii) having a polymerizable double bond (with the proviso that triisopropylsilyl methacrylate and 2-methoxyethyl (meth)acrylate are excluded), (B) cuprous oxide having an average particle size of 4.5 to 50 μm, (C) a rosin and/or a monocarboxylic acid compound, and optionally an additional component, wherein the rosin is selected from gum rosin, wood rosin, tall oil rosin, hydrogenated rosins and disproportionated rosins, the monocarboxylic acid compound is selected from aliphatic or alicyclic monocarboxylic acids, the ratio (WA/WC) of the content (WA) of the hydrolyzable copolymer (A) to the content (WC) of the rosin and/or the monocarboxylic acid compound (C) in the antifouling coating composition is 95/5 to 40/60 by mass, the hydrolyzable copolymer (A) is present in an amount of 7 to 30 mass% of the content of solids of the antifouling coating composition taken as 100 mass%, and the antifouling coating composition does not comprise medetomidine.

ADVANTAGEOUS EFFECTS OF INVENTION

When applied onto, for example, an epoxy resin-based coating film, the antifouling coating composition of the present invention not only shows long-term antifouling properties and long-term water resistance, but also attains excellent adhesion over a long term. Further, the antifouling coating composition can be applied while extending (easing the limitation on) the interval between the coating applications.

Furthermore, the antifouling coating composition does not require a vinyl-based binder intermediate coat and thus allows the coating process to be expedited. Moreover, the antifouling coating composition of the invention has a reduced viscosity to make it possible to reduce the content of volatile organic compounds (VOC). Further, the antifouling substrate production method of the present invention can produce antifouling substrates that attain outstanding long-term adhesion and thereby exhibit antifouling properties and water resistance over a long period of time.

BRIEF DESCRIPTION OF DRAWINGS

[Fig. 1] Fig. 1 illustrates the particle sizes (μm) and relative amounts (%) of particles of cuprous oxide (A), and a relationship thereof with grain size distribution.

[Fig. 2] Fig. 2 illustrates the particle sizes (μm) and relative amounts (%) of particles of cuprous oxide (B), and a relationship thereof with grain size distribution.

[Fig. 3] Fig. 3 illustrates the particle sizes (μm) and relative amounts (%) of particles of cuprous oxide (C), and a relationship thereof with grain size distribution.

[Fig. 4] Fig. 4 illustrates the particle sizes (μm) and relative amounts (%) of particles of cuprous oxide (D), and a relationship thereof with grain size distribution.

[Fig. 5] Fig. 5 illustrates the particle sizes (μm) and relative amounts (%) of particles of cuprous oxide (E), and a relationship thereof with grain size distribution.

DESCRIPTION OF EMBODIMENTS

Hereinbelow, antifouling coating compositions, antifouling coating films, antifouling substrates, and antifouling substrate production methods according to the present invention will be described in detail.

(Antifouling coating compositions)

An antifouling coating composition (antifouling paint) of the invention includes (A) a specific hydrolyzable copolymer, (B) cuprous oxide having an average particle size of 4.5 to 50 μm, and (C) a rosin and/or a monocarboxylic acid compound. The antifouling paint of the invention may include optional components in accordance with purpose.

〈(A) Hydrolyzable copolymers〉

The hydrolyzable copolymer (A) includes a structural unit (1) derived from triisopropylsilyl methacrylate (i), a structural unit (2) derived from 2-methoxyethyl (meth)acrylate (ii), and a structural unit (3) derived from a polymerizable monomer (iii) having a polymerizable double bond (with the proviso that triisopropylsilyl methacrylate and 2-methoxyethyl (meth)acrylate are excluded).

By virtue of the hydrolyzable copolymer (A) containing the structural units (1), the hydrolyzable antifouling coating composition that includes the hydrolyzable copolymer (A) attains excellent stability as an antifouling coating film in contact with seawater or freshwater. Because of the hydrolyzable copolymer (A) containing the structural units (1) and (2), the antifouling coating composition, when applied onto an epoxy resin-based coating film, attains excellent long-term antifouling properties and long-term adhesion. Further, this antifouling coating composition can form an antifouling coating film which strongly adheres to an epoxy resin-based coating film not only when the antifouling coating film is applied shortly after the formation of the epoxy resin-based coating film, but also when the interval between the coating applications is long. During a long interval between the coating applications, the curing of the epoxy resin-based coating film reaches an advanced stage and the hardness is increased. However, an antifouling coating film obtained from the hydrolyzable copolymer (A) that combines the structural units (1) and (2) can strongly adhere to such an epoxy resin-based coating film that has been cured to an advanced stage and has become hard, probably because the antifouling coating film has favorable hardness. As a result, the use of the hydrolyzable copolymer (A) having the specific structural units does away with the need of a vinyl resin-based binder coating.

The hydrolyzable copolymer preferably satisfies the following conditions 1 and 2.

Condition 1: The proportion of the structural units (1) is 30 to 70 mass%, and is desirably 40 to 65 mass% from the point of view of the enhancement of properties such as coating film hydrolyzability (consumption properties) and static antifouling properties.

Condition 2: The proportion of the structural units (2) is 5 to 40 mass%, and is desirably 10 to 30 mass% from the point of view of the enhancement of properties such as coating film hydrolyzability (consumption properties) and static antifouling properties.

From the point of view of the enhancement of properties such as coating workability, long-term storage stability, coating film water resistance (mechanical characteristics), coating film hydrolyzability (consumption properties), static antifouling properties and coating film appearance, the hydrolyzable copolymer (A) is present in an amount of 7 to 30 mass% of the antifouling coating composition of the invention. To attain enhancements in various performances of the antifouling paint such as coating workability, long-term storage stability, coating film water resistance (mechanical characteristics), coating film hydrolyzability (consumption properties), static antifouling properties and coating film appearance, the hydrolyzable copolymer (A) represents 7 to 30 mass% of the content of solids (thermal residues, nonvolatile components) of the antifouling coating composition of the invention taken as 100 mass%. Here, the solids (thermal residues) present in the antifouling coating composition are residues obtained by holding 1.5 g of the antifouling coating composition in a thermostatic chamber at 125°C for 1 hour to remove volatile components.

The polymerizable monomer (iii) having a polymerizable double bond is any of monomers other than triisopropylsilyl methacrylate (i) and 2-methoxyethyl (meth) acrylate (ii) . This monomer has a polymerizable double bond (for example, a vinyl group or a (meth) acryloyl group) and is copolymerized with the monomer (i) (namely, triisopropylsilyl methacrylate (i)) or the monomer (ii) (namely, 2-methoxyethyl (meth) acrylate (ii)) .

The polymerizable monomer (iii) is preferably an ester having a polymerizable double bond or a carboxylic acid having a polymerizable double bond. Such a compound used as the polymerizable monomer (iii) has good compatibility with triisopropylsilyl methacrylate (i) and 2-methoxyethyl (meth)acrylate (ii) and shows similar reactivities with respect to triisopropylsilyl methacrylate (i) and to 2-methoxyethyl (meth)acrylate (ii), with the result that the structural units derived from the respective monomers are evenly (randomly) incorporated and the resultant silyl methacrylic copolymer (A) attains good compatibility with solvents. If the monomers have markedly different polymerization reactivities from one another and are difficult to be copolymerized, the polymer that is obtained is a homopolymer or a copolymer of nonuniform component units. By using the compound described above as the polymerizable monomer (iii), such problems can be reduced and the hydrolyzable copolymer (A) can be produced stably.

Examples of the esters and the carboxylic acids used as the polymerizable monomers (iii) include (meth) acrylate esters except triisopropylsilyl methacrylate (i) and 2-methoxyethyl (meth)acrylate (ii), monocarboxylic acids having a polymerizable double bond, dicarboxylic acids having a polymerizable double bond or half esters (monoesters) and diesters thereof, vinyl esters, metal ester group-containing (meth)acrylates, and organosiloxane group-containing (meth)acrylates. Examples of the polymerizable monomers (iii) other than esters and carboxylic acids include styrenes.

Specific examples of the polymerizable monomers (iii) include (meth)acrylate esters such as methyl (meth)acrylate ester, ethyl (meth) acrylate ester, butyl (meth) acrylate ester, 2-ethylhexyl (meth)acrylate ester, lauryl (meth)acrylate ester, tridecyl (meth)acrylate ester, stearyl (meth)acrylate ester, allyl (meth)acrylate ester, cyclohexyl (meth)acrylate ester, benzyl (meth)acrylate ester, isobornyl (meth)acrylate ester, ethoxy (meth)acrylate ester, glycidyl (meth)acrylate ester, tetrahydrofurfuryl (meth)acrylate ester, hydroxyethyl (meth)acrylate ester, hydroxypropyl (meth)acrylate ester and hydroxybutyl (meth)acrylate ester;

monocarboxylic acids such as (meth)acrylic acid;
dicarboxylic acids such as itaconic acid, maleic acid and succinic acid, and half esters (monoesters) and diesters thereof;
styrenes such as styrene and $\alpha$-methylstyrene; and
vinyl esters such as vinyl acetate and vinyl propionate. These may be used singly, or two or more may be used in combination.

The weight average molecular weight (Mw) of the hydrolyzable copolymer (A) is preferably 5,000 to 100,000, and more preferably 10,000 to 60,000. When the weight average molecular weight is in this range, the antifouling coating composition including such a hydrolyzable copolymer (A) can form a coating film that exhibits good hydrolyzability to attain further enhanced static antifouling properties, and has still improved long-term mechanical characteristics (for example, adhesion of the antifouling coating film of the invention with respect to surfaces such as substrates and undercoating films, and appearance characteristics such as cracks, during prolonged immersion in water).

The above weight average molecular weight is a value measured by gel permeation chromatography (GPC) using a standard polystyrene calibration curve. The GPC conditions for the measurement of molecular weight are as follows.

(GPC conditions)

Pump: "HLC-8120GPC" (manufactured by TOSOH CORPORATION)
Columns: "SuperH2000 + H4000" (manufactured by TOSOH CORPORATION, 6 mm (inner diameter), each 15 cm (length))
Eluent: tetrahydrofuran (THF)

Other conditions

Flow rate: 0.500 ml/min
Detector: RI
Column oven temperature: 40°C

Standard substance: polystyrene

Sample preparation: A solution of the hydrolyzable copolymer (A) is dehydrated by the addition of a small amount of calcium chloride and is filtered through a membrane filter. The residue thus obtained is used as a GPC measurement sample.

In the hydrolyzable copolymer (A), the ratio of the mass of the structural units (1) to the total mass of the structural units (1), (2) and (3) ((1) + (2) + (3)), that is, the ratio (mass ratio (I)) ((1)/ [(1) + (2) + (3)]) is, for example, 30/100 to 70/100, preferably 40/100 to 65/100, and more preferably 45/100 to 65/100.

When the value of the mass ratio (I) is in the above range, the antifouling coating composition that is obtained can attain good coating film hydrolyzability (consumption properties), static antifouling properties and coating film water resistance (mechanical characteristics).

The ratio of the mass of the structural units (2) to the total mass of the structural units (1), (2) and (3) ((1) + (2) + (3)), that is, the ratio (mass ratio (II)) ((2)/[(1) + (2) + (3)]) is, for example, 5/100 to 40/100, preferably 7/100 to 35/100, and particularly preferably 10/100 to 30/100.

When the value of the mass ratio (II) is in the above range, antifouling coating films formed from the antifouling coating composition can attain sufficient coating film consumption properties (renewability) when immersed in water, in particular, seawater, thus exhibiting good long-term antifouling properties such as static antifouling properties, and are hardly cracked over a long period of time and can attain excellent adhesion.

The ratio of the mass of the structural units (3) to the total mass of the structural units (1), (2) and (3) ((1) + (2) + (3)), that is, the ratio (mass ratio (III)) ((3)/[(1) + (2) + (3)]) is, for example, 3/100 to 65/100, preferably 5/100 to 50/100, and particularly preferably 7/100 to 40/100.

The hydrolyzable copolymer (A) is prepared by copolymerizing triisopropylsilyl methacrylate (i), 2-methoxyethyl (meth)acrylate (ii) and a polymerizable monomer (iii) having a polymerizable double bond by a known polymerization method. Examples of the polymerization methods include radical or ion polymerization in solution polymerization, bulk polymerization, semi-batch polymerization, suspension polymerization, coordination polymerization, living polymerization or emulsion polymerization.

In view of the fact that the hydrolyzable copolymer (A) can be produced with enhanced productivity and production workability and the copolymer (A) that is obtained has a low viscosity, it is preferable that the monomers (1) to (3) be polymerized by solution polymerization using a common organic solvent such as toluene, xylene, methyl isobutyl ketone or n-butyl acetate. Because the copolymer (A) obtained in this case has a low viscosity, the amount of a solvent that is added to reduce the viscosity of the antifouling coating composition can be decreased and consequently the VOC content can be reduced. Further, the reduction in the viscosity of the antifouling coating composition leads to enhancements in properties such as the coating workability of the coating composition, and the appearance (leveling properties) of antifouling coating films.

A wide range of known radical polymerization catalysts may be used. Examples include azo compounds such as 2,2'-azobis(2-methylbutyronitrile) (AMBN), 2,2'-azobis(2,4-dimethylvaleronitrile) and 2,2'-azobis-isobutyronitrile, and peroxides such as benzoyl peroxide, t-butyl peroxy-2-ethylhexanoate, t-butyl peroxybenzoate and t-butyl peroxyoctoate, described in literature such as JP-A-2001-151830, paragraph [0099].

The proportions of the amounts (masses) in which the monomers (1) to (3) are fed to the polymerization reaction tend to agree with the proportions of the contents (masses) of the structural units (1) to (3) present in the resultant copolymer. Thus, the conditions 1 and 2 may be controlled to desired values, regarding the mass ratios (I) and (II) described hereinabove, based on the amounts (masses) and mass ratio in which the monomers are fed to the polymerization reaction.

((B) Cuprous oxide)

The cuprous oxide (B) present in the antifouling coating composition of the invention has an average particle size of 4.5 to 50 μm. The distribution of the particle sizes of the cuprous oxide (B) ranges from 0.1 to 100 μm. It is preferable that the cuprous oxide that is used have an average particle size of 4.5 to 30 μm and a particle size distribution ranging from 0.15 to 70 μm. The cuprous oxide (B) may be such that the particle sizes of a very small proportion (for example, not more than 0.5 mass%, or preferably not more than 0.1 mass%) of the particles are outside the above range of distribution, and the particle sizes of the rest of the particles (for example, not less than 99.5 mass%, or preferably not less than 99. 9 mass%) fall in the above range of distribution. When the particle sizes are in the above range, the cohesive force inside the coating film is not excessively high and the increase in paint viscosity can be avoided. As a result, such an antifouling coating composition which includes the hydrolyzable copolymer (A) and the rosin and/or the monocarboxylic acid compound (C) attains good adhesion with respect to an epoxy resin-based anticorrosive primer coating film and also the amount of VOC can be reduced. To attain enhancements in the long-term antifouling properties and adhesion of antifouling coating films, the content of the cuprous oxide (B) is preferably 10 to 800 parts by mass,

and more preferably 100 to 750 parts by mass with respect to 100 parts by mass of the hydrolyzable copolymer (A).

From the point of view of long-term stability during storage, the surface of the cuprous oxide (B) is preferably treated with an agent such as glycerin, stearic acid, lauric acid, sucrose, lecithin or mineral oil.

Specifically, the average particle size of the cuprous oxide (B) may be measured by the "method for measuring average particle size of cuprous oxide" described later in Examples. Alternatively, the measurement may be carried out in an abbreviated manner by observing a coating film under a scanning electron microscope with a magnification of 1000 times and confirming the presence or absence of cuprous oxide having particle diameters of 4.5 to 50 μm.

((C) Rosins and/or monocarboxylic acid compounds)

The antifouling coating composition of the invention essentially contains a rosin and/or a monocarboxylic acid compound to promote the leaching of the antifouling agent from an antifouling coating film formed from the composition and to enhance, in particular, static antifouling properties. The rosin is selected from gum rosin, wood rosin and tall oil rosin, and rosin derivatives such as hydrogenated rosins and disproportionated rosins. The monocarboxylic acid compound is selected from aliphatic or alicyclic monocarboxylic acids. Specific examples of the monocarboxylic acid compounds include trimethylisobutenylcyclohexenecarboxylic acid, naphthenic acid, versatic acid, stearic acid, and salicylic acid. These may be used singly, or two or more may be used in combination. In the antifouling coating composition of the invention, the mass ratio (WA/WC) of the mass (WA) of the hydrolyzable copolymer (A) to the mass (WC) of the rosin and/or the monocarboxylic acid compound is 95/5 to 40/60.

The antifouling coating composition of the invention is characterized in that it includes, in combination, the hydrolyzable copolymer (A) having the specific structural units, the cuprous oxide (B) having the specific average particle size, and the rosin and/or the monocarboxylic acid compound (C) . By virtue of this combination, the antifouling coating composition of the invention may be applied to, for example, an epoxy resin-based coating film to attain excellent antifouling properties and adhesion over a long period. Further, the interval between the coating applications can be extended (the limitation on the time interval can be eased). Furthermore, the antifouling coating composition does not require a vinyl-based binder intermediate coat and thus allows the coating process to be expedited. Moreover, the antifouling coating composition of the invention has a reduced viscosity to make it possible to reduce the content of volatile organic compounds (VOC). The coating composition is also excellent in airless coating workability.

The antifouling coating composition of the invention may contain at least one kind of an additive selected from the group consisting of inorganic copper compounds (D), color pigments (F), extender pigments (G), pigment dispersants (H), plasticizers (I), anti-sagging agents (J), anti-settling agents (K), dehydrating agents (L) and solvents (M) . These components (D) to (M) will be described in detail below.

〈(D) Inorganic copper compounds〉

To ensure that antifouling coating films formed from the antifouling coating composition will attain still enhanced antifouling properties, the antifouling coating composition of the invention may further contain an inorganic copper compound (D) in addition to the cuprous oxide (B) having an average particle size of 4.5 to 50 μm. Examples of the inorganic copper compounds include copper thiocyanate and cupronickel. The inorganic copper compounds (D) may be used singly, or two or more may be used in combination.

To attain an enhancement in the long-term antifouling properties of antifouling coating films, the content of the inorganic copper compound (D) in the antifouling coating composition of the invention is preferably 0 to 800 parts by mass, and more preferably 0 to 600 parts by mass with respect to 100 parts by mass of the hydrolyzable copolymer (A), and is preferably 0 to 300 parts by mass, and more preferably 0 to 250 parts by mass with respect to 100 parts by mass of the cuprous oxide (B).

When, in the preparation of the antifouling coating composition of the invention, particles of cuprous oxide having an average particle size of less than 4.5 μm are used as part of the cuprous oxide, it is preferable that cuprous oxide having an average particle size of not less than 4.5 μm be used in a proportion of more than 30 mass% relative to the whole cuprous oxide (100 mass%). The use of such cuprous oxide particles is more advantageous in that good adhesion with respect to an epoxy resin-based anticorrosive primer coating film is obtained. From the point of view of long-term stability during storage, the surface of the cuprous oxide with an average particle size of less than 4.5 μm is preferably treated with an agent such as glycerin, stearic acid, lauric acid, sucrose, lecithin or mineral oil.

〈(E) Organic antifouling agents〉

To ensure that antifouling coating films formed from the antifouling coating composition will attain still enhanced antifouling properties, in particular, enhanced protection against fouling by aquatic plant organisms, the antifouling coating composition of the invention further contains an organic antifouling agent (E). The organic antifouling agent (E)

is not particularly limited as long as the organic compound adds antifouling properties to antifouling coating films.

Examples of the organic antifouling agents (E) include metal pyrithiones such as copper and zinc pyrithiones, 4,5-dichloro-2-n-octyl-4-isothiazolin-3-one, 4-bromo-2-(4-chlorophenyl)-5-(trifluoromethyl)-1H-pyrrole-3-carbonitrile, pyridinetriphenylborane, 4-isopropylpyridinediphenylmethylborane, N,N-dimethyl-N'-(3,4-dichlorophenyl)urea, N-(2,4,6-trichlorophenyl)maleimide, 2,4,5,6-tetrachloroisophthalonitrile, 2-methylthio-4-tert-butylamino-6-cyclopropylamino-1,3,5-tr iazine, bisdimethyldithiocarbamoylzinc ethylenebisdithiocarbamate, chloromethyl-n-octyl disulfide, N' ,N'-dimethyl-N-phenyl-(N-fluorodichloromethylthio)sulfam ide, tetraalkylthiuram disulfide, zinc dimethyldithiocarbamate, zinc ethylenebisdithiocarbamate, 2,3-dichloro-N-(2',6'-diethylphenyl)maleimide and 2,3-dichloro-N-(2'-ethyl-6'-methylphenyl)maleimide. The organic antifouling agent (E) is selected from organic antifouling agents except medetomidine. The organic antifouling agents (E) may be used singly, or two or more may be used in combination.

To ensure that antifouling coating films formed from the antifouling coating composition will attain enhancements in long-term antifouling properties and in the retention of coating film water resistance (the retention of mechanical characteristics), the content of the organic antifouling agent (E) in the antifouling coating composition of the invention is preferably 0.1 to 500 parts by mass, and more preferably 0.5 to 300 parts by mass with respect to 100 parts by mass of the hydrolyzable copolymer (A). The content of the organic antifouling agent (E) is usually about 0.1 to 30 mass%, and preferably about 0.1 to 20 mass% of the antifouling coating composition (including a solvent) taken as 100 mass%.

((F) Color pigments)

To control the color tone of antifouling coating films formed from the antifouling coating composition or to impart a desired color tone to the coating films, the antifouling coating composition of the invention may contain a color pigment (F) .

Examples of the color pigments (F) include various known organic and inorganic color pigments. Examples of the organic color pigments include carbon black, naphthol red and phthalocyanine blue. Examples of the inorganic color pigments include red iron oxide, barite powder, titanium white and yellow iron oxide. The color pigments (F) may be used singly, or two or more may be used in combination.

The antifouling coating composition of the invention may include colorants except the color pigments (F), such as dyes, together with the color pigments (F) or instead of the color pigments (F).

To attain enhancements in color properties, hiding properties, exposure discoloration resistance, antifouling properties and coating film water resistance (mechanical characteristics) of antifouling coating films formed from the antifouling coating composition, the content of the color pigment (F) in the antifouling coating composition of the invention is preferably 0.01 to 100 parts by mass, and more preferably 0.01 to 50 parts by mass with respect to 100 parts by mass of the hydrolyzable copolymer (A).

The content of the color pigment (F) is usually about 0.1 to 30 mass%, and preferably about 0.1 to 20 mass% of the antifouling coating composition (including a solvent) taken as 100 mass%.

((G) Extender pigments)

The extender pigments (G) provide enhancements in coating film properties such as crack resistance of antifouling coating films formed from the antifouling coating composition.

Examples of the extender pigments (G) include talc, silica, mica, clay, potassium feldspar, zinc oxide, calcium carbonate, kaolin, alumina white, white carbon, aluminum hydroxide, magnesium carbonate, barium carbonate and barium sulfate. Of these, talc, silica, mica, clay, calcium carbonate, kaolin, barium sulfate, potassium feldspar and zinc oxide are preferable. Calcium carbonate and white carbon are also used as an anti-settling agent (K) described later and a matting agent, respectively. The extender pigments (G) may be used singly, or two or more may be used in combination.

To attain enhancements in coating film water resistance (mechanical characteristics), antifouling properties and coating film hydrolyzability (consumption properties) of antifouling coating films formed from the antifouling coating composition, the content of the extender pigment (G) in the antifouling coating composition of the invention is preferably 0.1 to 500 parts by mass, and more preferably 10 to 300 parts by mass with respect to 100 parts by mass of the hydrolyzable copolymer (A).

The content of the extender pigment (G) is usually about 0.1 to 50 mass%, and preferably about 0.1 to 40 mass% of the antifouling coating composition (including a solvent) taken as 100 mass%.

((H) Pigment dispersants)

Examples of the pigment dispersants (H) include known various organic and inorganic pigment dispersants such as aliphatic amines and organic acids (for example, "Duomeen TDO" (manufactured by Lion Corporation) and

"Disperbyk 101" (manufactured by BYK Japan K.K.)). The pigment dispersants (H) may be used singly, or two or more may be used in combination.

To attain enhancements in the effect of reducing the paint viscosity of the antifouling coating composition and the effect of preventing flooding in antifouling coating films, the content of the pigment dispersant (H) in the antifouling coating composition of the invention is preferably 0.01 to 100 parts by mass, and more preferably 0.01 to 50 parts by mass with respect to 100 parts by mass of the hydrolyzable copolymer (A) .

The content of the pigment dispersant (H) is usually about 0.1 to 10 mass%, and preferably about 0.1 to 5 mass% of the antifouling coating composition (including a solvent) taken as 100 mass%.

((I) Plasticizers)

The antifouling coating composition of the invention preferably contains a plasticizer (I) to enhance the crack resistance of the obtainable antifouling coating films. Examples of the plasticizers (I) include paraffin chlorides (chlorinated paraffins), petroleum resins, ketone resins, TCP (tricresyl phosphate), polyvinyl ethyl ethers and dialkyl phthalates. To attain enhancements in coating film water resistance (mechanical characteristics) and coating film hydrolyzability (consumption properties) of antifouling coating films formed from the antifouling coating composition, the plasticizer (I) is preferably a paraffin chloride (chlorinated paraffin), a petroleum resin or a ketone resin. The plasticizers (I) may be used singly, or two or more may be used in combination.

The paraffin chlorides may have a linear or branched molecular structure, and may be liquid or solid (for example, powdery) at room temperature (for example, 23°C).

The paraffin chlorides usually have an average number of carbon atoms of 8 to 30, or preferably 10 to 26 per molecule. The incorporation of such a paraffin chloride allows the antifouling coating composition to form antifouling coating films that rarely suffer problems such as cracking (breakage) and peeling. If the average number of carbon atoms is less than 8, the antifouling coating films may not be effectively rendered resistant to cracking sufficiently. If, on the other hand, the average number of carbon atoms exceeds 30, the hydrolyzability (renewability, self-polishing properties) of antifouling coating films may be reduced and consequently the antifouling properties are sometimes deteriorated.

In the paraffin chlorides, the viscosity (unit: P, measured at 25°C) is usually not less than 1, and preferably not less than 1.2, and the specific gravity (25°C) is usually 1.05 to 1.80, and preferably 1.10 to 1.70.

The chlorination ratio (chlorine content) of the paraffin chlorides is usually 35 to 70 mass%, and preferably 35 to 65 mass% of the paraffin chloride taken as 100 mass%. The incorporation of a paraffin chloride having this chlorination ratio allows the antifouling coating composition to form coating films that rarely suffer problems such as cracking (breakage) and peeling. Specific examples of the paraffin chlorides include "TOYOPARAX 150" and "TOYOPARAX A-70" (both manufactured by TOSOH CORPORATION).

Examples of the petroleum resins include C5 resins, C9 resins, styrene resins, dichloropentadiene resins, and hydrogenated products of these petroleum resins. Specific examples of the petroleum resins include "Quintone 1500" and "Quintone 1700" (both manufactured by ZEON CORPORATION).

To attain enhancements in coating film hydrolyzability (consumption properties), antifouling properties and coating film water resistance (mechanical characteristics) of antifouling coating films formed from the antifouling coating composition, the content of the plasticizer (I) in the antifouling coating composition of the invention is preferably 0.1 to 300 parts by mass, more preferably 0.1 to 200 parts by mass, and still more preferably 0.1 to 150 parts by mass with respect to 100 parts by mass of the hydrolyzable copolymer (A) .

The content of the plasticizer (I) is usually about 0.1 to 30 mass%, and preferably about 0.1 to 20 mass% of the antifouling coating composition (including a solvent) taken as 100 mass%.

((J) Anti-sagging agents)

To reduce the occurrence of sagging of the antifouling coating composition when the coating composition is applied to a substrate, the antifouling coating composition of the invention may contain an anti-sagging agent (J) (also referred to as a thickening agent).

Examples of the anti-sagging agents (J) include amide waxes, hydrogenated castor oil waxes, mixtures of these waxes, and synthetic fine powdery silica. The anti-sagging agents (J) may be used singly, or two or more may be used in combination.

In particular, the anti-sagging agent (J) is preferably amide wax or synthetic fine powdery silica. The use of amide wax or synthetic fine powdery silica as the anti-sagging agent (J) makes it possible to enhance the storage stability of the antifouling coating composition, and to prevent a decrease in adhesion (interlayer adhesion, overcoatability) of the antifouling coating film with respect to a coating film (overcoating film) that is formed thereon by the application of the same kind of coating composition (antifouling coating composition) or a different kind of coating composition onto the antifouling coating film.

Some example commercially available anti-sagging agents (J) are "DISPARLON A630-20X" (manufactured by Kusumoto Chemicals, Ltd.) and "ASAT-250F" (manufactured by ITOH OIL CHEMICALS CO., LTD.).

In the antifouling coating composition of the invention, the content of the anti-sagging agent (J) is preferably 0.1 to 100 parts by mass, and more preferably 0.1 to 50 parts by mass with respect to 100 parts by mass of the hydrolyzable copolymer (A). The content of the anti-sagging agent (J) is usually about 0.1 to 20 mass%, and preferably about 0.1 to 10 mass% of the antifouling coating composition (including a solvent) taken as 100 mass%. Controlling the content of the anti-sagging agent (J) in the above range makes it possible to enhance the storage stability of the antifouling coating composition, and to prevent a decrease in adhesion (interlayer adhesion, overcoatability) of the antifouling coating film with respect to a coating film (overcoating film) that is formed thereon by the application of the same kind of coating composition (antifouling coating composition) or a different kind of coating composition onto the antifouling coating film.

⟨(K) Anti-settling agents⟩

To prevent the generation of precipitates during storage of the coating composition and to attain enhanced stirrability, the antifouling coating composition of the invention may contain an anti-settling agent (K).

Examples of the anti-settling agents (K) include steates of Al, Ca or Zn, polyethylene waxes and polyethylene oxide-based waxes. The anti-settling agents (K) may be used singly, or two or more may be used in combination.

In particular, the anti-settling agent (K) is preferably polyethylene oxide-based wax. An example commercially available polyethylene oxide-based wax is "DISPARLON 4200-20" (manufactured by Kusumoto Chemicals, Ltd.).

In the antifouling coating composition of the invention, the content of the anti-settling agent (K) is preferably 0.1 to 100 parts by mass, and more preferably 0.1 to 50 parts by mass with respect to 100 parts by mass of the hydrolyzable copolymer (A). The content of the anti-settling agent (K) is usually about 0.1 to 20 mass%, and preferably about 0.1 to 10 mass% of the antifouling coating composition (including a solvent) taken as 100 mass%. Controlling the content of the anti-settling agent (K) in the above range makes it possible to enhance the storage stability of the antifouling coating composition, and to prevent a decrease in adhesion (interlayer adhesion, overcoatability) of the antifouling coating film with respect to a coating film (overcoating film) that is formed thereon by the application of the same kind of coating composition (antifouling coating composition) or a different kind of coating composition onto the antifouling coating film.

((L) Dehydrating agents)

While the antifouling coating composition of the invention exhibits excellent storage stability by its containing the hydrolyzable copolymer (A) having good storage stability, still enhanced long-term storage stability may be obtained by adding a dehydrating agent (L) as required. The dehydrating agent (L) is preferably at least one dehydrating agent selected from the group of inorganic dehydrating agents consisting of synthetic zeolite, anhydrous gypsum and hemihydrate gypsum, and the group of organic dehydrating agents consisting of alkoxysilanes such as tetramethoxysilane, tetraethoxysilane, tetrabutoxysilane, tetraphenoxysilane, methyltriethoxysilane, dimethyldiethoxysilane and trimethylethoxysilane, or polyalkoxysilanes that are condensates of the alkoxysilanes, and alkyl orthoformates such as methyl orthoformate and ethyl orthoformate. The content of the dehydrating agent (L) is preferably 0.1 to 50 parts by mass with respect to 100 parts by mass of the hydrolyzable copolymer (A) .

⟨(M) Solvents⟩

The antifouling coating composition of the invention may contain a solvent (M) such as water or an organic solvent as required in order to enhance the dispersibility of components such as the hydrolyzable copolymer (A) and to control the viscosity of the composition. In the antifouling coating composition of the invention, the solvent (M) may be a solvent used in the preparation of the hydrolyzable copolymer (A) or may be a solvent newly added during mixing of the hydrolyzable copolymer (A) and other components as required.

Examples of the organic solvents include aromatic organic solvents such as xylene, toluene and ethylbenzene; ketones such as methyl ethyl ketone, methyl isobutyl ketone and cyclohexanone; aliphatic (having about 1 to 10 carbon atoms, or preferably about 2 to 5 carbon atoms) monohydric alcohols such as ethanol, isopropyl alcohol, n-butanol and isobutanol; and ester solvents such as ethyl acetate and butyl acetate. The solvents (M) may be used singly, or two or more may be used in combination.

In the antifouling coating composition of the invention, the content of the solvent (M) is preferably 100 to 500 parts by mass, and more preferably 150 to 350 parts by mass with respect to 100 parts by mass of the hydrolyzable copolymer (A) . In the antifouling coating composition of the invention, the content of the solvent (M) is in most cases usually 20 to 80 mass%, and preferably 30 to 70 mass% of the antifouling coating composition taken as 100 mass%. It is, however, preferable to use the solvent in such an amount that the VOC content will be less than 400 g/L.

〈Methods for producing antifouling coating compositions〉

The antifouling coating composition of the invention may be produced using a known method appropriately. For example, the hydrolyzable copolymer (A), the cuprous oxide (B) having an average particle size of 4.5 to 50 μm, the rosin and/or the monocarboxylic acid compound (C) and, as required, the components (D) to (M) may be added to a stirring vessel at once or in any order and may be mixed together with use of a known stirring and mixing device so as to disperse or dissolve the components in the solvent. The cuprous oxide (B) having an average particle size of 4.5 to 50 μm may originally have an average particle size of 4.5 to 50 μm and such cuprous oxide particles may be directly mixed with the other components. Alternatively, cuprous oxide having an average particle size of not less than 4.5 μm and cuprous oxide having an average particle size of less than 4.5 μm may be provided separately and these particles may be mixed with the other components in such a ratio that the average particle size of the whole cuprous oxide will be 4.5 to 50 μm.

The antifouling coating composition is preferably prepared in such a manner that the components such as the hydrolyzable copolymer (A) are dispersed or dissolved into the solvent as described above, and thereafter an amide wax (such as, for example, DISPARLON A630-20X) is added and dispersed (for example, about 10 to 20 minutes) . The antifouling coating composition obtained in this manner is advantageously less prone to sag when applied to a substrate.

As described hereinabove, the solvent (M) may be used at the time of preparation of the hydrolyzable copolymer (A).

Examples of the stirring and mixing devices include high-speed dispersers, sand grinding mills, basket mills, ball mills, three-roll mills, ROSS mixers, planetary mixers and universal Shinagawa agitators.

The antifouling coating composition obtained in the manner described above usually has a content of volatile organic compounds (VOC) of less than 400 g/L.

(Antifouling coating films and antifouling substrates)

An antifouling coating film of the invention is formed from the antifouling coating composition described above. That is, the antifouling coating film of the invention includes the solid components of the antifouling coating composition of the invention. The antifouling coating film of the invention, when formed from, for example, the inventive antifouling coating composition including the solvent (M) , may be formed by applying the antifouling coating composition of the invention onto a substrate and curing the composition (that is, removing the solvent (M)) by, for example, natural drying or by the use of a drying device such as a heater.

An antifouling substrate of the invention includes a substrate and the antifouling coating film that are stacked together.

Here, the antifouling substrate is not particularly limited, but is preferably one which is subjected to contact with seawater or freshwater. Specific examples thereof include underwater structures such as water supply inlets and drains in various power plants (thermal power plants and nuclear power plants), and sludge diffusion prevention fences used in various offshore or river engineering works for building structures such as coast roads, submarine tunnels, port facilities, and canals or waterways, ships (in particular, portions from the draft line to the bottom of a ship), and fishery materials (such as fishing gears including ropes and fishing nets, floats and buoys).

The substrates used in the antifouling substrates may be of any materials without limitation as long as the substrates require precautions for problems such as fouling in water. In particular, example materials for ships include steel, aluminum, wood and FRP, and example materials for such items as floats and buoys include synthetic resins.

In a preferred embodiment, the antifouling substrate of the invention is obtained by forming an epoxy resin-based anticorrosive coating film (an epoxy resin-containing coating film) (P) onto a surface of a substrate, and painting the coating film with the antifouling coating composition to form an antifouling coating film (an antifouling coating film that is a cured film of the antifouling coating composition) (Q) . Such an antifouling substrate not only shows long-term antifouling properties and long-term properties, but also attains excellent adhesion over a long period. Further, the antifouling substrate can be produced while extending (easing the limitation on) the interval between the coating applications. Furthermore, the antifouling substrate does not require a vinyl-based binder intermediate coat and thus allows the coating process to be expedited.

As described above, the antifouling substrate preferably has a configuration represented by substrate/epoxy resin-based coating film (P)/antifouling coating film (Q). More specifically, the configuration may be represented by substrate/epoxy resin-based anticorrosive coating film (P1)/antifouling coating film (Q), substrate/epoxy resin-based anticorrosive coating film (P1) /epoxy resin-based binder coating film (P2)/antifouling coating film (Q), or substrate/epoxy resin-based binder coating film (P2)/antifouling coating film (Q). The epoxy resin-based anticorrosive coating film (P1), the epoxy resin-based binder coating film (P2) and the antifouling coating film (Q) may each be provided plurally and stacked on one another. The substrate may be primer-treated. The epoxy resin-based coating film (P) is preferably

stacked directly onto the substrate. The antifouling coating film (Q) is preferably stacked directly onto the epoxy resin-based coating film (P).

Here, the epoxy resin-based coating film (P) will be described.

(Epoxy resin-based coating films (P))

The epoxy resin-based coating film (P) is obtained from an epoxy resin-based coating composition (p).

The epoxy resin-based coating composition (p) preferably includes a bisphenol-type epoxy resin (p-1) and an amine-based curing agent (p-3), and may further include a vinyl-based copolymer (p-2).

〈Bisphenol-type epoxy resins (p-1)〉

The bisphenol-type epoxy resin that is used preferably has an epoxy equivalent of 160 to 500, and still more preferably 180 to 500. Such an epoxy resin is usually liquid to solid. The above range of the epoxy equivalent of the bisphenol-type epoxy resin added to the coating composition of the invention is advantageous from the points of view of the adhesiveness of the coating composition and the workability during the coating application.

Because the epoxy resin used in the invention is of bisphenol type, films formed by application are tough and flexible and thereby exhibit excellent adhesiveness.

Specific examples of such bisphenol-type epoxy resins include epoxy resins of bisphenol A type and bisphenol F type, dimer acid-modified epoxy resins, polysulfide-modified epoxy resins, and hydrogenated products of these bisphenol-type epoxy resins.

Examples of the bisphenol A-type epoxy resins include bisphenol A-type diglycidyl ethers such as bisphenol A diglycidyl ether, bisphenol A polypropylene oxide diglycidyl ether, bisphenol A ethylene oxide diglycidyl ether, hydrogenated bisphenol A diglycidyl ether and hydrogenated bisphenol A propylene oxide diglycidyl ether. Examples of the bisphenol F-type epoxy resins include bisphenol F-type diglycidyl ethers such as bisphenol F diglycidyl ether.

Of these, bisphenol A-type epoxy resins are preferable.

Examples of commercial products of the bisphenol A-type epoxy resins which are liquid at room temperature include "jER 828 (trade name)" (manufactured by Mitsubishi Chemical Corporation, epoxy equivalent: 184 to 194, viscosity: 12,000 to 15,000 cPs/25°C), "EPOTOHTO YDF-170 (trade name)" (manufactured by Tohto Kasei Co., Ltd., epoxy equivalent: 160 to 180, viscosity: 2,000 to 5, 000 cPs) and "FLEP 60 (trade name) " (manufactured by Toray Thiokol Co., Ltd, epoxy equivalent: about 280, viscosity: about 17,000 cPs/25°C) ; those which are semisolid at room temperature include "jER 834-90X (trade name)" (manufactured by Mitsubishi Chemical Corporation, epoxy equivalent: 230 to 270) and "EPOTOHTO YD134 (trade name)" (manufactured by Tohto Kasei Co., Ltd., epoxy equivalent: 230 to 270) ; and those which are solid at room temperature include "jER 1001-75X (trade name)" (manufactured by Mitsubishi Chemical Corporation, epoxy equivalent: 450 to 500).

These bisphenol-type epoxy resins may be used singly, or two or more may be used in combination.

In the invention, an epoxy resin other than those mentioned above may be used together with the bisphenol-type epoxy resin (p-1). For example, an epoxy resin other than bisphenol types may be used in a small amount that is not detrimental to the objects of the present invention, for example, in an amount of not more than 60 parts by mass with respect to 100 parts by mass of the bisphenol-type epoxy resin (p-1) .

Examples of such non-bisphenol-type epoxy resins include cyclic aliphatic epoxy resins, acyclic aliphatic epoxy resins, and epoxidized oil-type epoxy resins.

〈Vinyl-based copolymers (p-2)〉

Examples of the vinyl-based copolymers (p-2) include vinyl chloride-vinyl acetate copolymer, vinyl chloride-vinyl propionate copolymer, vinyl chloride-vinyl alkyl ether copolymer, vinyl chloride-acrylonitrile copolymer, vinyl chloride-diethyl maleate copolymer, vinyl chloride-ethylene copolymer, vinyl chloride-maleic anhydride copolymer, vinyl chloride-alkyl (meth)acrylate copolymer (alkyl group: about 1 to 5 carbon atoms), vinyl chloride-styrene copolymer, vinyl chloride-vinylidene chloride copolymer, vinyl chloride-vinyl stearate copolymer, vinyl chloride-maleic acid (or maleate ester) copolymer, vinyl chloride-aliphatic vinyl copolymer and ethylene-vinyl acetate copolymer.

Examples further include graft-modified polyvinyl chlorides obtained by grafting "additional monomers" other than vinyl chloride onto vinyl chloride-based copolymers, and copolymers obtained by grafting vinyl chloride monomers onto "other polymers" other than polyvinyl chlorides.

Examples of the "additional monomers" include those monomers mentioned in the above vinyl chloride-based copolymers, specifically, alkyl (meth)acrylate esters (alkyl group: about 1 to 5 carbon atoms), styrene, acrylonitrile, diethyl maleate, olefins (e.g.: ethylene, propylene), maleic anhydride, vinylidene chloride, stearic acid, maleic acid, maleate esters and aliphatic vinyls.

Of the vinyl-based copolymers (p-2), vinyl chloride-vinyl alkyl ether copolymer and ethylene-vinyl acetate copolymer are preferable because they have particularly high affinity for the bisphenol-type epoxy resin (p-1) and provide excellent overcoatability and corrosion resistance.

In particular, preferred vinyl chloride-vinyl alkyl ether copolymers are copolymers of vinyl chloride and a vinyl alkyl ether in which the alkyl group has 1 to 10, preferably 2 to 5 carbon atoms. For example, among others, vinyl chloride-vinyl isobutyl ether copolymer, vinyl chloride-vinyl isopropyl ether copolymer, and vinyl chloride-vinyl ethyl ether copolymer are preferably used.

Desirably, the weight average molecular weight (Mw) of the vinyl-based copolymer (p-2) is usually 10,000 to 100,000, preferably 20,000 to 50,000, and particularly preferably 22,000 to 40,000. When the weight average molecular weight is in the above range, the affinity for epoxy resins tends to be improved.

Of the vinyl chloride-vinyl alkyl ether copolymers, examples of the vinyl chloride-vinyl isobutyl ether copolymers include "Laroflex LR8829 (trade name)", "Laroflex MP25 (trade name) ", "Laroflex MP35 (trade name)" and "Laroflex MP45 (trade name)" manufactured by BASF.

The vinyl-based copolymers may be used singly, or two or more may be used in combination.

The vinyl-based copolymer (p-2) is usually used in an amount of 5 to 40 parts by mass, and preferably 7 to 30 parts by mass with respect to 100 parts by mass of the bisphenol-type epoxy resin (p-1) . When contained in this amount in the coating composition, the vinyl-based copolymer (p-2) tends to attain good affinity for the bisphenol-type epoxy resin (p-1) and provide good corrosion resistance and overcoatability. From the points of view of the anticorrosive performance of coating films and the overcoatability with overcoating paints, the proportion of the vinyl-based copolymer (p-2) desirably falls in the above range.

In the present invention, the vinyl-based copolymer (p-2) may be used together with an "additional thermoplastic resin" other than the vinyl-based copolymers (p-2) while still achieving the objects of the invention. When the epoxy resin-based coating composition contains such an additional thermoplastic resin, the content of the additional thermoplastic resin may be such that the total amount of the thermoplastic resin components including the vinyl-based copolymer (p-2) is usually 5 to 40 parts by mass, preferably 7 to 30 parts by mass, and particularly preferably 10 to 30 parts by mass with respect to 100 parts by mass of the bisphenol-type epoxy resin (p-1).

The thermoplastic resins including the vinyl-based copolymer (p-2) serve to relax internal stress during curing of the epoxy resin-based coating composition (p) so as to improve the adhesion of the epoxy layer formed by the application and curing of the epoxy paint with respect to a base or an undercoat layer. Further, such thermoplastic resins are soluble in solvents, and are therefore dissolved by the solvent in an overcoating paint. Consequently, the thermoplastic resins allow the epoxy layer to attain enhanced adhesion with respect to the overcoating paint and allow the interval after the coating application of the epoxy paint to be extended (the limitation on the time interval is eased), thus contributing to the expansion of variety of overcoating paints applicable onto the epoxy layer.

Specific examples of the thermoplastic resins other than the vinyl-based copolymers (p-2) include chlorinated polyolefins such as chlorinated rubber, chlorinated polyethylene and chlorinated polypropylene; acrylic resins such as methyl (meth)acrylate-based copolymers, propyl (meth)acrylate-based copolymers, butyl (meth)acrylate-based copolymers and cyclohexyl (meth)acrylate-based copolymers; styrene-based resins; aromatic petroleum resins; aliphatic petroleum resins; condensed urea-aldehyde resins; ketone-based resins; coumarone-indene resins; and pentadiene-based polymers.

The thermoplastic resins may be used singly, or two or more may be used in combination.

⟨Amine-based curing agents (p-3)⟩

The amine-based curing agent (p-3) is usually of such a type as, for example, aliphatic, alicyclic, aromatic or heterocyclic. The epoxy resin-based coating composition (p) containing such an amine-based curing agent (p-3) can be cured at room temperature and is therefore suitable for applications where the coating application usually takes place in a room-temperature environment, such as painting of outside shell of a ship.

Examples of the aliphatic amines include diethylenetriamine, dipropylenetriamine, tetraethylenepentamine, trimethylhexamethylenediamine, tetrakis(2-aminoethylaminomethyl)methane, 1,3-bis(2'-aminoethylamino)propane, triethylene-bis(trimethylene)hexamine, bis(3-aminoethyl)amine, bis(cyanoethyl)diethylenetriamine, and bishexamethylenetriamine $[H_2N(CH_2)_6NH(CH_2)_6NH_2]$.

Examples of the alicyclic amines include 4-cyclohexanediamine, 4,4'-methylenebiscyclohexylamine, 4,4'-isopropylidenebiscyclohexylamine, norbornanediamine (NBDA/2,5- and 2,6-bis(aminomethyl)-bicyclo[2,2,1]heptane), bis(aminomethyl)cyclohexane, diaminodicyclohexylmethane, isophoronediamine (IPDA/3-aminomethyl-3,5,5-trimethylcyclohexylamine) and menthenediamine.

Examples of the aromatic amines include bis(aminoalkyl)benzenes, bis(aminoalkyl)naphthalenes and aromatic polyamine compounds having two or more primary amino groups bonded to the benzene ring. Specific examples include o-xylylenediamine, m-xylylenediamine (MXDA), p-xylylenediamine, phenylenediamine, naphthylenediamine, diaminodiphenylmethane, diaminodiethylphenylmethane, 2,2-bis(4-aminophenyl)propane, 4,4'-diaminodiphenyl ether, 4,4'-diaminobenzophenone, 4,4'-diaminodiphenyl ether, 4,4'-diaminodiphenylsulfone, 2,2'-dimethyl-4,4'-diaminodiphenylmethane, 2,4-diaminobiphenyl, 2,3'-dimethyl-4,4'-diaminobiphenyl, 3,3'-dimethoxy-4,4'-diaminobiphenyl, bis(aminomethyl)naphthalene, bis(aminoethyl)naphthalene and 2,4,6-tris(3-aminomethylphenylmethylaminomethyl)phenol.

Examples of the heterocyclic amines include N-methylpiperazine, morpholine, 1,4-bis-(3-aminopropyl)-piperazine, piperazine-1,4-diazacycloheptane, 1-(2'-aminoethylpiperazine), 1- [2'-(2"-aminoethylamino)ethyl]piperazine, 1,11-diazacycloeicosane and 1,15-diazacyclooctacosane.

Further, modified products of the above amines such as polyamides of the above amines and modified products thereof, epoxy adducts with epoxy compounds, Mannich modified products and carboxylic acid-modified products may be also used.

Of the above compounds, polyamides and modified products thereof are preferable in terms of corrosion resistance and adhesion.

Desirably, the amine value of the amine-based curing agent (p-3) is usually 50 to 1,000, and preferably 80 to 500. When the amine value of the curing agent is in this range, the balance between drying properties and adhesiveness tends to be enhanced. The curing agents having such an amine value are usually liquid to solid.

Specific examples of such polyamides include "LUCKAMIDE N-153 (trade name)" (manufactured by DIC CORPORATION, amine value: 80 to 120), "LUCKAMIDE TD-966 (trade name)" (manufactured by DIC CORPORATION, amine value: 150 to 190), and "SUNMIDE 315 (trade name) " (manufactured by Sanwa Chemical Industry Co., Ltd., amine value: 280 to 340) .

Specific examples of the modified products of polyamides include "PA-23 (trade name)" (manufactured by Ohtake-Meishin Chemical Co., Ltd., amine value: 80 to 150) that is an epoxy adduct obtained by adding an epoxy compound to a polyamide, and "ADEKA HARDENER EH-350 (trade name)" (manufactured by ADEKA CORPORATION, amine value: 320 to 380) that is a Mannich modified product of modified polyamide.

Of these polyamides and modified products thereof, adducts with epoxy compounds are preferably used.

Other modified amines may be specifically exemplified by a variety of compounds such as "Ancamine 2074 (trade name)" (manufactured by Air Products and Chemicals, Inc., amine value : 325 to 355) that is a modified alicyclic polyamine, "Cardolite 541LV (trade name)" (manufactured by Cardolite Corporation, amine value: 260 to 350) and "Cardolite CM-5055 (trade name)" (manufactured by Cardolite Corporation, amine value: 150 to 250) that are modified phenalkamines, and "ADEKA HARDENER EH-101 (trade name)" (manufactured by ADEKA CORPORATION, amine value: 400 to 500) that is a modified aromatic polyamine.

Further, use may be made of ketimine-type curing agents obtained by modifying the above amine compounds with ketones.

Specific examples include "Ancamine MCA (trade name)" (manufactured by Air Products and Chemicals, Inc . , amine value : 250 to 350) that is a ketimine-type modified alicyclic polyamine.

The amine-based curing agents (p-3) may be used singly, or two or more may be used in combination.

In the invention, the amine-based curing agent (p-3) is desirably used in such an amount that the equivalent ratio of the epoxy components in the bisphenol-type epoxy resin (p-1) in the epoxy resin-based coating composition (p) to the amine components (epoxy components:amine components) is usually 1:0.25 to 1:0.9, and preferably 1:0.3 to 1:0.8. When the amine-based curing agent (p-3) is used in such an amount, the obtainable coating film tends to attain excellent drying properties, corrosion resistance and overcoatability. In other words, the amine-based curing agent (p-3) in the invention is usually used in an amount of 10 to 80 parts by mass, and preferably 20 to 70 parts by mass with respect to 100 parts by mass of the bisphenol-type epoxy resin (p-1) in the epoxy resin-based coating composition (p).

In the invention, an "additional epoxy resin curing agent" other than the amine-based curing agent (p-3) may be used while still achieving the objects of the invention.

The "additional epoxy resin curing agent" is not particularly limited as long as it can react with and cure the epoxy resin. Examples thereof include carboxylic acid-based curing agents, acid anhydride-based curing agents and silanol-based curing agents other than the amine-based curing agents (p-3) described hereinabove.

(Other additives)

The epoxy resin-based coating composition (p) may contain various additives such as plasticizers, extender pigments, color pigments, anticorrosive pigments, solvents, curing accelerators, coupling agents, anti-sagging agents and anti-settling agents.

When the epoxy resin-based coating composition (p) (epoxy resin paint) includes the components (p-1), (p-2) and (p-3), the composition is used as a two-component paint that includes a base component including the epoxy resin (p-1) and the vinyl-based copolymer (p-2), and a curing agent including the amine-based curing agent (p-3), or is used as a two-component paint that includes a base component including the epoxy resin (p-1), and a curing agent including the vinyl-based copolymer (p-2) and the amine-based curing agent (p-3). The two-component system is desirable in the

invention.

Specifically, a composition including the components (p-1) and (p-3) is suitably used as an epoxy resin-based anticorrosive coating composition (p1), and a composition including the components (p-1), (p-2) and (p-3) is suitably used as an epoxy resin-based anticorrosive coating composition (p1) and as an epoxy resin-based binder coating composition (p2). The epoxy resin-based anticorrosive coating composition (p1) and the epoxy resin-based binder coating composition (p2) may contain additives described hereinabove.

In the present specification, a coating film obtained from the epoxy resin-based anticorrosive coating composition (p1) is referred to as an epoxy resin-based anticorrosive coating film (P1), and a coating film obtained from the epoxy resin-based binder coating composition (p2) is referred to as an epoxy resin-based binder coating film (P2).

The method for producing the antifouling substrate is characterized in that it includes curing the antifouling coating composition described hereinabove to form an antifouling coating film on a surface of the substrate. Specifically, the antifouling substrate of the invention is obtained by applying the antifouling coating composition of the invention onto the substrate (target, item to be coated) with use of a coating device such as, for example, an air sprayer, an airless sprayer, a brush or a roller, or impregnating the substrate with the antifouling composition, and drying and curing the coating composition that has been caused to coat or impregnate the substrate by, for example, natural drying (drying at about room temperature) or by the use of a drying device such as a heater thereby to form an antifouling coating film on the substrate.

Preferably, the epoxy resin-based paint is applied directly onto the substrate or after the surface of the substrate has been coated with a primer, that is, onto the surface of the primer-treated substrate, and the paint is cured to form an epoxy resin-based coating film; thereafter the antifouling coating composition (antifouling paint) of the invention is applied one or more times and the antifouling coating composition applied is cured to form an antifouling coating film.

The epoxy resin-based coating film (P) and the antifouling coating film (Q) disposed on the surface of the substrate exhibit excellent performance (antifouling properties, in particular, static antifouling properties) in preventing the attachment of aquatic organisms such as sea lettuce, barnacles, green laver, serpula, oysters and bryozoans (Bugula neritina) over a long period. When, in particular, the antifouling coating film contains an antifouling component (e.g.: copper or an inorganic copper compound (component B or D) or an organic antifouling agent (component E)), such antifouling components can be gradually released over a long period of time.

When, in particular, the substrate is a ship (in particular, ship bottom), an underwater structure or the like that is made of steel, the antifouling coating composition is usually applied several times (in large thickness: dry thickness of about 100 to 1000 $\mu$m, or about 100 to 600 $\mu$m) directly onto the steel surface or onto the surface of a cured coating of an anticorrosive primer paint such as an epoxy resin-based paint applied onto the surface of the substrate for corrosion protection. The antifouling substrate thus obtained attains excellent coating film adhesion and antifouling properties, and shows appropriate flexibility and outstanding crack resistance in a well-balanced manner.

The surface of the substrate which already has the antifouling coating film of the invention or a conventional antifouling coating film may be overcoated with the antifouling coating film of the invention for the purpose of repairing.

The thickness of the antifouling coating film formed by one coating application is not particularly limited. When the substrate is a ship or an underwater structure, the thickness is, for example, about 30 to 250 $\mu$m per operation.

As discussed hereinabove, ships and underwater structures having the antifouling coating film of the invention can be prevented from the attachment of aquatic organisms over a long period, and can consequently exhibit excellent adhesion over a long period and can maintain the functions of the ships and underwater structures over a long period.

[EXAMPLES]

Hereinbelow, the present invention will be described in further detail based on Examples. However, it should be construed that the invention is not limited to such Examples. In "Examples", "%" means mass% unless otherwise mentioned.

[Production Example 1]

A reaction vessel equipped with a stirrer, a reflux condenser, a thermometer, a nitrogen inlet tube and a dropping funnel was loaded with 53 parts by mass of xylene. While the xylene was stirred with the stirrer in a nitrogen atmosphere, heating was performed under normal pressure until the temperature of the xylene in the reaction vessel reached 85°C. While maintaining the temperature of the xylene in the reaction vessel at 85°C, a monomer mixture including 60 parts by mass of TIPSMA (triisopropylsilyl methacrylate), 20 parts by mass of MEMA (2-methoxyethyl methacrylate), 10 parts by mass of MMA (methyl methacrylate), 10 parts by mass of BA (butyl acrylate) and 1 part by mass of AMBN (2,2'-azobis(2-methylbutyronitrile)) was added to the reaction vessel through the dropping funnel over a period of 2 hours.

Next, 0.5 parts by mass of t-butyl peroxyoctoate was added to the reaction vessel. The mixture was stirred with the stirrer under normal pressure for 2 hours while maintaining the liquid temperature in the reaction vessel at 85°C.

The liquid temperature in the reaction vessel was then increased from 85°C to 110°C, and heating was performed for 1 hour. Thereafter, 14 parts by mass of xylene was added to the reaction vessel. The liquid temperature in the reaction vessel was lowered, and stirring was terminated when the liquid temperature reached 40°C. Consequently, a polymer solution (a1) including a hydrolyzable copolymer was prepared. Properties of the polymer solution (a1) were measured in accordance with the testing conditions described later in "Evaluation of characteristics". The results are described in Table 1.

[Production Examples 2 to 5]

Polymer solutions (a2), (a3), (b1) and (b2) including a hydrolyzable copolymer were prepared and properties were measured in the same manner as in Production Example 1, except that the monomer mixture used in Production Example 1 was replaced by a monomer mixture having a formulation described in Table 1. The results are described in Table 1.

〈Table 1〉 Resin Production Examples

| Production Examples | | 1 | 2 | 3 | 4 | 5 |
|---|---|---|---|---|---|---|
| Polymer solutions Nos. | | a1 | a2 | a3 | b1 | b2 |
| Solvent | Xylene | 67 | 67 | 67 | 67 | 67 |
| Components dropped | Triisopropylsilyl methacrylate | 60 | 50 | 60 | | 50 |
| | Triisopropylsilyl acrylate | | | | 50 | |
| | 2-Methoxyethyl methacrylate | 20 | 30 | | 30 | |
| | 2-Methoxyethyl acrylate | | | 20 | | |
| | Methyl methacrylate | 10 | 10 | 10 | 10 | 40 |
| | Butyl acrylate | 10 | 10 | 10 | 10 | 10 |
| | AMBN | 1 | 1 | 1 | 1 | 1 |
| | Total | 168 | 168 | 168 | 168 | 168 |
| Additional component | T-butyl peroxyoctoate | 0.5 | 0.5 | 0.5 | 0.5 | 0.5 |
| Properties evaluation | Solid content (mass%) in polymer solution | 59.8 | 60.1 | 60.5 | 60.4 | 60.5 |
| | Viscosity (mPa·s/25°C) of polymer solution | 3,001 | 2,430 | 2,210 | 2,653 | 4,055 |
| | Weight average molecular weight (Mw) | 36,870 | 34,980 | 35,940 | 34,900 | 34,850 |

[Production Example 6] Production of gum rosin copper salt

A 1,000 ml flask equipped with a thermometer, a reflux condenser and a stirrer was loaded with 400 g of a xylene solution of China gum rosin (WW rosin, acid value: 172) (solid content: 50%), 200 g of cuprous oxide and 100 g of methanol. Glass beads (2.5 to 3.5 mm in diameter) were added, and the mixture was stirred at 70 to 80°C for 8 hours and was kept warm at 50°C for 2 days. The resultant mixture solution was cooled to room temperature (25°C) and was filtered. The filtrate was vacuum concentrated and thereby methanol components were distilled away. Xylene was added to the concentrated liquid. A xylene solution of gum rosin copper salt (dark blue transparent solution, approximately 50% solid content) was thus obtained. The xylene solution of gum rosin copper salt contained 50.8% thermal residues. This gum rosin copper salt was used in Comparative Example 3 described later.

[Production Example 7] Production of gum rosin zinc salt

A 1,000 ml flask equipped with a thermometer, a reflux condenser, a stirrer and a dropping device was loaded with 300 g of China gum rosin (WW rosin, acid value: 172), 50 g of zinc oxide and 150 g of xylene. Stirring was performed at 70 to 80°C for 4 hours under a stream of nitrogen, resulting in a transparent solution. Thereafter, water was removed by azeotropic dehydration with xylene, and the resultant liquid was kept warm at 50°C for 2 days. The resultant mixture

solution was cooled to room temperature (25°C) and was filtered. Xylene was added. A xylene solution of gum rosin zinc salt (yellow transparent solution, approximately 50% solid content) was thus obtained. The xylene solution of gum rosin zinc salt contained 50.5% thermal residues. This gum rosin zinc salt was used in Comparative Example 4 described later.

[Example 1]

The antifouling coating composition of the invention may be prepared using techniques such as apparatus and means similar to those for known general antifouling paints. For example, the composition may be produced in such a manner that the hydrolyzable copolymer (A) is prepared beforehand, this resin (the reaction liquid), the cuprous oxide (B) and the components (C) to (M) and further, in Comparative Examples 3 and 4, the rosin copper salt and zinc salt described above, are added at once or sequentially to the solvent, and the resultant mixture is stirred and mixed.

Specifically, in Example 1, a plastic container (volume: 500 ml) was loaded with 10.2 parts by mass of xylene, 21.8 parts by mass of the copolymer solution (a1), and 4.4 parts by mass of rosin as a component (C). The mixture was mixed with use of a paint shaker until the components were uniformly dispersed or dissolved. Thereafter, the plastic container was further loaded with 50 parts by mass of cuprous oxide Purple Copp as a component (B), and additives (1.8 parts by mass of talc FC-1, 3.8 parts by mass of zinc oxide (zinc flower No. 3), 3 parts by mass of red iron oxide No. 404, 2 parts by mass of titanium white R-5N, 1 part by mass of copper pyrithione, 0.5 parts by mass of DISPARLON 4200-20, and 0.5 parts by mass of Ethyl Silicate 28) . These components were dispersed by stirring with the paint shaker for 1 hour.

After the dispersing process, 1.0 part by mass of DISPARLON A630-20X was added, and the mixture was stirred with the paint shaker for 20 minutes. The residues were removed by filtering the mixture through a filter net (opening: 80 mesh), and a filtrate (a coating composition A1) was thus obtained.

[Examples 2 to 12, Comparative Examples 1 to 5, and Reference Example 6]

Coating compositions were prepared in the same manner as in Example 1, except that the solvent, the polymer solution, the components B and C, and the additives used in Example 1 were changed as described in Tables 2 and 3.

The coating compositions prepared as described above in Examples 1 to 12, Comparative Examples 1 to 5 and Reference Example 6 according to the formulations shown in Tables 2 and 3 were tested in accordance with the testing conditions described later in "Evaluation of characteristics". The results are described in Tables 4-1 to 4-9, and 5-1 to 5-6.

Referring to Tables 4-1 to 4-9, and 5-1 to 5-6, the coating compositions A1 to A12 and the coating compositions B1 to B6 are the coating compositions obtained in Examples 1 to 12, and Comparative Examples 1 to 5 and Reference Example 6, respectively.

Details such as the manufacturers of the raw materials are described in Table 6.

〈Table 2〉

| | | Examples | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Coating compositions Nos. | | A1 | A2 | A3 | A4 | A5 | A6 | A7 | A8 | A9 | A10 | A11 | A12 |
| Polymer solutions | a1 | 21.8 | | | | | | | | | | | |
| | a2 | | 21.8 | 21.8 | 21.8 | 21.8 | 24.3 | 21.8 | 21.8 | | 21.8 | 21.8 | 21.8 |
| | a3 | | | | | | | | | 21.8 | | | |
| | b1 | | | | | | | | | | | | |
| | b2 | | | | | | | | | | | | |
| Components B | Trimethylisobutenylcyclohexenecarboxylic acid (50% xylene solution) | | | | | | | 8.8 | | | 4.4 | | |
| | Versatic acid | | | | | | | | 4.4 | | | | |
| | Rosin | 4.4 | 4.4 | 4.4 | 4.4 | 4.4 | 2.9 | | | 4.4 | 2.2 | 4.4 | 4.4 |
| Components C | LoLo Tint 97 | | 50 | | | | | | | | | | |
| | Purple Copp | 50 | | 50 | | | 50 | 50 | 50 | 50 | 50 | 35 | 25 |
| | Red Copp 97N Premium | | | | 50 | | | | | | | | |
| | NC-803 | | | | | 50 | | | | | | | |
| | NC-301 | | | | | | | | | | | 15 | 25 |
| Additives | Copper pyrithione | 1 | 1 | 1 | 1 | 1 | 1 | 1 | 1 | 1 | 1 | 1 | 1 |
| | Zinc flower No. 3 | 3.8 | 3.8 | 3.8 | 3.8 | 3.8 | 4.8 | 3.8 | 3.8 | 3.8 | 3.8 | 3.8 | 3.8 |
| | Red iron oxide No. 404 | 3 | 3 | 3 | 3 | 3 | 3 | 3 | 3 | 3 | 3 | 3 | 3 |
| | Titanium white R-5N | 2 | 2 | 2 | 2 | 2 | 2 | 2 | 2 | 2 | 2 | 2 | 2 |
| | DISPARLON 4200-20 | 0.5 | 0.5 | 0.5 | 0.5 | 0.5 | 0.5 | 0.5 | 0.5 | 0.5 | 0.5 | 0.5 | 0.5 |
| | Talc FC-1 | 1.8 | 1.8 | 1.8 | 1.8 | 1.8 | 1 | 1.8 | 1.8 | 1.8 | 1.8 | 1.8 | 1.8 |
| | Ethyl Silicate 28 | 0.5 | 0.5 | 0.5 | 0.5 | 0.5 | 0.5 | 0.5 | 0.5 | 0.5 | 0.5 | 0.5 | 0.5 |
| | Xylene | 10.2 | 10.2 | 10.2 | 10.2 | 10.2 | 9 | 5.8 | 10.2 | 10.2 | 8 | 10.2 | 10.2 |
| | DISPARLON A630-20X | 1 | 1 | 1 | 1 | 1 | 1 | 1 | 1 | 1 | 1 | 1 | 1 |
| Total | | 100 | 100 | 100 | 100 | 100 | 100 | 100 | 100 | 100 | 100 | 100 | 100 |

(continued)

| | Examples | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| VOC (g/L, theoretical) | 387 | 387 | 387 | 387 | 387 | 385 | 387 | 387 | 387 | 387 | 387 | 387 |

(Table 3)

| | | Comparative Examples | | | | | Reference Example |
|---|---|---|---|---|---|---|---|
| | | 1 | 2 | 3 | 4 | 5 | 6 |
| Coating compositions Nos. | | B1 | B2 | B3 | B4 | B5 | B6 |
| Polymer solutions | a1 | | | | | | |
| | a2 | | | 21.8 | 21.8 | | 21.8 |
| | a3 | | | | | | |
| | b1 | 21.8 | | | | 21.8 | |
| | b2 | | 21.8 | | | | |
| Components B | Trimethylisobutenylcyclohexenecarboxylic acid (50% xylene solution) | | | | | | |
| | Versatic acid | | | | | | |
| | Rosin | 4.4 | 4.4 | | | 4.4 | 4.4 |
| | Rosin copper salt (solid content 50%) | | | 8.8 | | | |
| | Rosin zinc salt (solid content 50%) | | | | 8.8 | | |
| Components C | LoLo Tint 97 | | | | | | |
| | Purple Copp | 50 | 50 | 50 | 50 | | |
| | Red Copp 97N Premium | | | | | | |
| | NC-803 | | | | | | |
| | NC-301 | | | | | 50 | 50 |
| Additives | Zinc flower No. 3 | 3.8 | 3.8 | 3.8 | 3.8 | 3.8 | 3.8 |
| | Red iron oxide No. 404 | 3 | 3 | 3 | 3 | 3 | 3 |
| | Titanium white R-5N | 2 | 2 | 2 | 2 | 2 | 2 |
| | DISPARLON 4200-20 | 0.5 | 0.5 | 0.5 | 0.5 | 0.5 | 0.5 |
| | Talc FC-1 | 1.8 | 1.8 | 1.8 | 1.8 | 1.8 | 1.8 |
| | Copper pyrithione | 1 | 1 | 1 | 1 | 1 | 1 |
| | Ethyl Silicate 28 | 0.5 | 0.5 | 0.5 | 0.5 | 0.5 | 0.5 |
| | Xylene | 10.2 | 10.2 | 5.8 | 5.8 | 10.2 | 10.2 |
| | DISPARLON A630-20X | 1 | 1 | 1 | 1 | 1 | 1 |
| Total | | 100 | 100 | 100 | 100 | 100 | 100 |
| VOC (g/L, theoretical) | | 387 | 387 | 387 | 387 | 387 | 387 |

〈Table 4-1: Paint viscosity data〉

| Examples | 1 | 2 | 3 | 4 | 5 | 6 | 7 | 8 | 9 | 10 | 11 | 12 |
|---|---|---|---|---|---|---|---|---|---|---|---|---|
| Coating compositions Nos. | A1 | A2 | A3 | A4 | A5 | A6 | A7 | A8 | A9 | A10 | A11 | A12 |
| Paint viscosity (dPa·s/23°C) | 20 | 19 | 20 | 21 | 22 | 23 | 18 | 18 | 20 | 19 | 21 | 23 |
| Airless coating workability | A | A | A | A | A | A | A | A | A | A | A | A |

(Table 4-2: Adhesion data)

<table>
<tr><td colspan="15">1) Adhesion with respect to epoxy paint-1 coating film</td></tr>
<tr><td rowspan="3"></td><td colspan="2">Examples</td><td>1</td><td>2</td><td>3</td><td>4</td><td>5</td><td>6</td><td>7</td><td>8</td><td>9</td><td>10</td><td>11</td><td>12</td></tr>
<tr><td colspan="2">Coating compositions Nos.</td><td>A1</td><td>A2</td><td>A3</td><td>A4</td><td>A5</td><td>A6</td><td>A7</td><td>A8</td><td>A9</td><td>A10</td><td>A11</td><td>A12</td></tr>
<tr><td>Immersion periods</td><td>Intervals between coating applications</td><td></td><td></td><td></td><td></td><td></td><td></td><td></td><td></td><td></td><td></td><td></td><td></td></tr>
<tr><td rowspan="20">Test of accelerated deterioration of adhesion after outdoor exposure</td><td rowspan="4">1 Month</td><td>1 Day</td><td>0</td><td>0</td><td>0</td><td>0</td><td>0</td><td>0</td><td>0</td><td>0</td><td>0</td><td>0</td><td>0</td><td>0</td></tr>
<tr><td>3 Days</td><td>0</td><td>0</td><td>0</td><td>0</td><td>0</td><td>0</td><td>0</td><td>0</td><td>0</td><td>0</td><td>0</td><td>0</td></tr>
<tr><td>5 Days</td><td>0</td><td>0</td><td>0</td><td>0</td><td>0</td><td>0</td><td>0</td><td>0</td><td>0</td><td>0</td><td>0</td><td>0</td></tr>
<tr><td>7 Days</td><td>0</td><td>0</td><td>0</td><td>0</td><td>0</td><td>0</td><td>0</td><td>0</td><td>0</td><td>0</td><td>0</td><td>0</td></tr>
<tr><td rowspan="4">3 Months</td><td>1 Day</td><td>0</td><td>0</td><td>0</td><td>0</td><td>0</td><td>0</td><td>0</td><td>0</td><td>0</td><td>0</td><td>0</td><td>0</td></tr>
<tr><td>3 Days</td><td>0</td><td>0</td><td>0</td><td>0</td><td>0</td><td>0</td><td>0</td><td>0</td><td>0</td><td>0</td><td>0</td><td>0</td></tr>
<tr><td>5 Days</td><td>0</td><td>0</td><td>0</td><td>0</td><td>0</td><td>0</td><td>0</td><td>0</td><td>0</td><td>0</td><td>0</td><td>0</td></tr>
<tr><td>7 Days</td><td>0</td><td>0</td><td>0</td><td>0</td><td>0</td><td>0</td><td>0</td><td>0</td><td>0</td><td>0</td><td>0</td><td>0</td></tr>
<tr><td rowspan="4">6 Months</td><td>1 Day</td><td>0</td><td>0</td><td>0</td><td>0</td><td>0</td><td>0</td><td>0</td><td>0</td><td>0</td><td>0</td><td>0</td><td>0</td></tr>
<tr><td>3 Days</td><td>0</td><td>0</td><td>0</td><td>0</td><td>0</td><td>0</td><td>0</td><td>0</td><td>0</td><td>0</td><td>0</td><td>0</td></tr>
<tr><td>5 Days</td><td>0</td><td>0</td><td>0</td><td>0</td><td>0</td><td>0</td><td>0</td><td>0</td><td>0</td><td>0</td><td>0</td><td>0</td></tr>
<tr><td>7 Days</td><td>0</td><td>0</td><td>0</td><td>0</td><td>0</td><td>0</td><td>0</td><td>0</td><td>0</td><td>0</td><td>0</td><td>0</td></tr>
<tr><td rowspan="4">9 Months</td><td>1 Day</td><td>0</td><td>0</td><td>0</td><td>0</td><td>0</td><td>0</td><td>0</td><td>0</td><td>0</td><td>0</td><td>0</td><td>0</td></tr>
<tr><td>3 Days</td><td>0</td><td>0</td><td>0</td><td>0</td><td>0</td><td>0</td><td>0</td><td>0</td><td>0</td><td>0</td><td>0</td><td>0</td></tr>
<tr><td>5 Days</td><td>0</td><td>0</td><td>0</td><td>0</td><td>0</td><td>0</td><td>0</td><td>0</td><td>0</td><td>0</td><td>0</td><td>0</td></tr>
<tr><td>7 Days</td><td>0</td><td>0</td><td>0</td><td>0</td><td>0</td><td>0</td><td>0</td><td>0</td><td>0</td><td>0</td><td>0</td><td>0</td></tr>
<tr><td rowspan="4">12 Months</td><td>1 Day</td><td>0</td><td>0</td><td>0</td><td>0</td><td>0</td><td>0</td><td>0</td><td>0</td><td>0</td><td>0</td><td>0</td><td>0</td></tr>
<tr><td>3 Days</td><td>0</td><td>0</td><td>0</td><td>0</td><td>0</td><td>0</td><td>0</td><td>0</td><td>0</td><td>0</td><td>0</td><td>0</td></tr>
<tr><td>5 Days</td><td>0</td><td>0</td><td>0</td><td>0</td><td>0</td><td>0</td><td>0</td><td>0</td><td>0</td><td>0</td><td>0</td><td>0</td></tr>
<tr><td>7 Days</td><td>0</td><td>0</td><td>0</td><td>0</td><td>0</td><td>0</td><td>0</td><td>0</td><td>0</td><td>0</td><td>0</td><td>0</td></tr>
</table>

〈Table 4-3: Adhesion data〉

| 2) Adhesion with respect to epoxy paint-2 coating film | | | | | | | | | | | | | | |
|---|---|---|---|---|---|---|---|---|---|---|---|---|---|---|
| | Examples | | 1 | 2 | 3 | 4 | 5 | 6 | 7 | 8 | 9 | 10 | 11 | 12 |
| | Coating compositions Nos. | | A1 | A2 | A3 | A4 | A5 | A6 | A7 | A8 | A9 | A10 | A11 | A12 |
| | Immersion periods | Intervals between coating applications | | | | | | | | | | | | |
| Test of accelerated deterioration of adhesion after outdoor exposure | 1 Month | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 3 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 6 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 9 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 12 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |

(Table 4-4: Adhesion data)

| 3) Adhesion with respect to epoxy paint-3 coating film | | | | | | | | | | | | | | |
|---|---|---|---|---|---|---|---|---|---|---|---|---|---|---|
| | Examples | | 1 | 2 | 3 | 4 | 5 | 6 | 7 | 8 | 9 | 10 | 11 | 12 |
| | Coating compositions Nos. | | A1 | A2 | A3 | A4 | A5 | A6 | A7 | A8 | A9 | A10 | A11 | A12 |
| | Immersion periods | Intervals between coating applications | | | | | | | | | | | | |
| Test of accelerated deterioration of adhesion after outdoor exposure | 1 Month | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 3 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 6 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 9 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 12 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |

〈Table 4-5: Adhesion data〉

| 4) Adhesion with respect to epoxy paint-4 coating film | | | | | | | | | | | | | | |
|---|---|---|---|---|---|---|---|---|---|---|---|---|---|---|
| | Examples | | 1 | 2 | 3 | 4 | 5 | 6 | 7 | 8 | 9 | 10 | 11 | 12 |
| | Coating compositions Nos. | | A1 | A2 | A3 | A4 | A5 | A6 | A7 | A8 | A9 | A10 | A11 | A12 |
| | Immersion periods | Intervals between coating applications | | | | | | | | | | | | |
| Test of accelerated deterioration of adhesion after outdoor exposure | 1 Month | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 3 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 6 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 9 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 12 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |

(Table 4-6: Adhesion data)

| 5) Adhesion with respect to epoxy paint-5 coating film | | | | | | | | | | | | | | |
|---|---|---|---|---|---|---|---|---|---|---|---|---|---|---|
| | Examples | | 1 | 2 | 3 | 4 | 5 | 6 | 7 | 8 | 9 | 10 | 11 | 12 |
| | Coating compositions Nos. | | A1 | A2 | A3 | A4 | A5 | A6 | A7 | A8 | A9 | A10 | A11 | A12 |
| | Immersion periods | Intervals between coating applications | | | | | | | | | | | | |
| Test of accelerated deterioration of adhesion after outdoor exposure | 1 Month | 1 Day | 0 | 0 | 0 | 0 | 0 | 0 | 0 | 0 | | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 3 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 6 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 9 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 12 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |

〈Table 4-7: Adhesion data〉

| 6) Adhesion with respect to epoxy paint-6 coating film | | | | | | | | | | | | | | |
|---|---|---|---|---|---|---|---|---|---|---|---|---|---|---|
| | Examples | | 1 | 2 | 3 | 4 | 5 | 6 | 7 | 8 | 9 | 10 | 11 | 12 |
| | Coating compositions Nos. | | A1 | A2 | A3 | A4 | A5 | A6 | A7 | A8 | A9 | A10 | A11 | A12 |
| | Immersion periods | Intervals between coating applications | | | | | | | | | | | | |
| Test of accelerated deterioration of adhesion after outdoor exposure | 1 Month | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 3 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 6 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 9 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 12 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |

(Table 4-8: Adhesion data)

| 7) Adhesion with respect to epoxy paint-7 coating film | | | | | | | | | | | | | | |
|---|---|---|---|---|---|---|---|---|---|---|---|---|---|---|
| | Examples | | 1 | 2 | 3 | 4 | 5 | 6 | 7 | 8 | 9 | 10 | 11 | 12 |
| | Coating compositions Nos. | | A1 | A2 | A3 | A4 | A5 | A6 | A7 | A8 | A9 | A10 | A11 | A12 |
| | Immersion periods | Intervals between coating applications | | | | | | | | | | | | |
| Test of accelerated deterioration of adhesion after outdoor exposure | 1 Month | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 3 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 6 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 9 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |
| | 12 Months | 1 Day | 0 | 0 | 0 | 0 | 0 | 0 | 0 | 0 | 0 | 0 | 0 | 0 |
| | | 3 Days | 0 | 0 | 0 | 0 | 0 | 0 | 0 | 0 | 0 | 0 | 0 | 0 |
| | | 5 Days | 0 | 0 | 0 | 0 | 0 | 0 | 0 | 0 | 0 | 0 | 0 | 0 |
| | | 7 Days | 0 | 0 | 0 | 0 | 0 | 0 | 0 | 0 | 0 | 0 | 0 | 0 |

〈Table 4-9: Static antifouling data〉

| | | | | | | | | | | | | | | |
|---|---|---|---|---|---|---|---|---|---|---|---|---|---|---|
| Static antifouling test | Examples | | 1 | 2 | 3 | 4 | 5 | 6 | 7 | 8 | 9 | 10 | 11 | 12 |
| | Coating compositions Nos. | | A1 | A2 | A3 | A4 | A5 | A6 | A7 | A8 | A9 | A10 | A11 | A12 |
| | Immersion periods | 1 Month | 0 | 0 | 0 | 0 | 0 | 0 | 0 | 0 | 0 | 0 | 0 | 0 |
| | | 3 Months | 0 | 0 | 0 | 0 | 0 | 0 | 0 | 0 | 0 | 0 | 0 | 0 |
| | | 6 Months | 0 | 0 | 0 | 0 | 0 | 0 | 0 | 0 | 0 | 0 | 0 | 0 |
| | | 9 Months | 0 | 0 | 0 | 0 | 0 | 0 | 0 | 0 | 0 | 0 | 0 | 0 |
| | | 12 Months | 0 | 0 | 0 | 0 | 0 | 0 | 0 | 0 | 0 | 0 | 0 | 0 |

〈Table 5-1: Paint viscosity data〉

| | Comp. Ex. | | | | | Ref. Ex. |
|---|---|---|---|---|---|---|
| | 1 | 2 | 3 | 4 | 5 | 6 |
| Coating compositions Nos. | B1 | B2 | B3 | B4 | B5 | B6 |
| Paint viscosity (dPa·s/23°C) | 19 | 22 | 26 | 26 | 28 | 28 |
| Airless coating workability | A | A | B | B | B | B |

(Table 5-2: Adhesion data)

1) Adhesion with respect to epoxy paint-1 coating film

| | | | Comp. Ex. | | | | | Ref. Ex. |
|---|---|---|---|---|---|---|---|---|
| | | | 1 | 2 | 3 | 4 | 5 | 6 |
| | Coating compositions Nos. | | B1 | B2 | B3 | B4 | B5 | B6 |
| | Immersion periods | Intervals between coating applications | | | | | | |
| Test of accelerated deterioration of adhesion after outdoor exposure | 1 Month | 1 Day | | 0 | 0 | 0 | 0 | 0 |
| | | 3 Days | 0 | 0 | 1 | 0 | 0 | 0 |
| | | 5 Days | 0 | 0 | 1 | 1 | 0 | 0 |
| | | 7 Days | 0 | 1 | 1 | 1 | 1 | 1 |
| | 3 Months | 1 Day | 0 | 0 | 0 | 0 | 0 | 0 |
| | | 3 Days | 1 | 0 | 1 | 0 | 1 | 0 |
| | | 5 Days | 1 | 0 | 1 | 1 | 2 | 0 |
| | | 7 Days | 2 | 1 | 1 | 1 | 2 | 2 |
| | 6 Months | 1 Day | 1 | 0 | 1 | 1 | 1 | 0 |
| | | 3 Days | 2 | 0 | 1 | 1 | 2 | 0 |
| | | 5 Days | 2 | 1 | 1 | 1 | 2 | 0 |
| | | 7 Days | 2 | 1 | 1 | 1 | 3 | 2 |
| | 9 Months | 1 Day | 2 | 1 | 1 | 1 | 2 | 0 |
| | | 3 Days | 2 | 1 | 2 | 1 | 2 | 0 |
| | | 5 Days | 2 | 2 | 2 | 2 | 3 | 1 |
| | | 7 Days | 2 | 2 | 2 | 2 | 3 | 2 |
| | 12 Months | 1 Day | 3 | 1 | 1 | 1 | 3 | 0 |
| | | 3 Days | 3 | 2 | 2 | 1 | 3 | 0 |
| | | 5 Days | 3 | 2 | 2 | 2 | 3 | 2 |
| | | 7 Days | 3 | 2 | 2 | 2 | 3 | 3 |

(Table 5-3: Adhesion data)

| 2) Adhesion with respect to epoxy paint-2 coating film | | | | | | | | |
|---|---|---|---|---|---|---|---|---|
| | | | Comp. Ex. | | | | | Ref. Ex. |
| | | | 1 | 2 | 3 | 4 | 5 | 6 |
| | Coating compositions Nos. | | B1 | B2 | B3 | B4 | B5 | B6 |
| | Immersion periods | Intervals between coating applications | | | | | | |
| Test of accelerated deterioration of adhesion after outdoor exposure | 1 Month | 1 Day | 0 | 0 | 0 | 0 | 0 | 0 |
| | | 3 Days | 0 | 0 | 1 | 0 | 0 | 0 |
| | | 5 Days | 0 | 0 | 1 | 1 | 0 | 0 |
| | | 7 Days | 0 | 1 | 1 | 1 | 1 | 1 |
| | 3 Months | 1 Day | 0 | 0 | 0 | 0 | 0 | 0 |
| | | 3 Days | 1 | 0 | 1 | 0 | 1 | 0 |
| | | 5 Days | 1 | 0 | 1 | 1 | 2 | 0 |
| | | 7 Days | 2 | 1 | 1 | 1 | 2 | 2 |
| | 6 Months | 1 Day | 1 | 0 | 1 | 1 | 1 | 0 |
| | | 3 Days | 2 | 0 | 1 | 1 | 2 | 0 |
| | | 5 Days | 2 | 1 | 1 | 1 | 2 | 0 |
| | | 7 Days | 2 | 1 | 1 | 1 | 3 | 2 |
| | 9 Months | 1 Day | 2 | 1 | 1 | 1 | 2 | 0 |
| | | 3 Days | 2 | 1 | 2 | 1 | 2 | 0 |
| | | 5 Days | 2 | 2 | 2 | 2 | 3 | 1 |
| | | 7 Days | 2 | 2 | 2 | 2 | 3 | 3 |
| | 12 Months | 1 Day | 3 | 1 | 1 | 1 | 3 | 0 |
| | | 3 Days | 3 | 2 | 2 | 1 | 3 | 0 |
| | | 5 Days | 3 | 2 | 2 | 2 | 3 | 2 |
| | | 7 Days | 3 | 2 | 2 | 2 | 3 | 3 |

〈Table 5-4: Adhesion data〉

| 3) Adhesion with respect to epoxy paint-3 coating film | | | | | | | | |
|---|---|---|---|---|---|---|---|---|
| | | | Comp. Ex. | | | | | Ref. Ex. |
| | | | 1 | 2 | 3 | 4 | 5 | 6 |
| | Coating compositions Nos. | | B1 | B2 | B3 | B4 | B5 | B6 |
| | Immersion periods | Intervals between coating applications | | | | | | |
| Test of accelerated deterioration of adhesion after outdoor exposure | 1 Month | 1 Day | 0 | 0 | 0 | 0 | 0 | 0 |
| | | 3 Days | 0 | 0 | 1 | 0 | 0 | 0 |
| | | 5 Days | 0 | 0 | 1 | 1 | 0 | 0 |
| | | 7 Days | 0 | 1 | 1 | 1 | 1 | 1 |
| | 3 Months | 1 Day | 0 | 0 | 0 | 0 | 0 | 0 |
| | | 3 Days | 1 | 0 | 1 | 0 | 1 | 0 |
| | | 5 Days | 1 | 0 | 1 | 1 | 2 | 0 |
| | | 7 Days | 2 | 1 | 1 | 1 | 2 | 2 |
| | 6 Months | 1 Day | 1 | 0 | 1 | 1 | 1 | 0 |
| | | 3 Days | 2 | 0 | 1 | 1 | 2 | 0 |
| | | 5 Days | 2 | 1 | 1 | 1 | 2 | 0 |
| | | 7 Days | 2 | 1 | 1 | 1 | 3 | 2 |
| | 9 Months | 1 Day | 2 | 1 | 1 | 1 | 2 | 0 |
| | | 3 Days | 2 | 1 | 2 | 1 | 2 | 0 |
| | | 5 Days | 2 | 2 | 2 | 2 | 3 | 1 |
| | | 7 Days | 2 | 2 | 2 | 2 | 3 | 3 |
| | 12 Months | 1 Day | 3 | 1 | 1 | 1 | 3 | 0 |
| | | 3 Days | 3 | 2 | 2 | 1 | 3 | 0 |
| | | 5 Days | 3 | 2 | 2 | 2 | 3 | 2 |
| | | 7 Days | 3 | 2 | 2 | 2 | 3 | 3 |

(Table 5-5: Adhesion data)

| 4) Adhesion with respect to epoxy paint-4 coating film | | | | | | | | | |
|---|---|---|---|---|---|---|---|---|---|
| | | | Comp. Ex. | | | | | Ref. Ex. |
| | | | 1 | 2 | 3 | 4 | 5 | 6 |
| | Coating compositions Nos. | | B1 | B2 | B3 | B4 | B5 | B6 |
| | Immersion periods | Intervals between coating applications | | | | | | |
| Test of accelerated deterioration of adhesion after outdoor exposure | 1 Month | 1 Day | 0 | 0 | 0 | 0 | 0 | 0 |
| | | 3 Days | 0 | 0 | 1 | 0 | 0 | 0 |
| | | 5 Days | 0 | 0 | 1 | 1 | 0 | 0 |
| | | 7 Days | 0 | 1 | 1 | 1 | 1 | 1 |
| | 3 Months | 1 Day | 0 | 0 | 0 | 0 | 0 | 0 |
| | | 3 Days | 1 | 0 | 1 | 0 | 1 | 0 |
| | | 5 Days | 1 | 0 | 1 | 1 | 2 | 0 |
| | | 7 Days | 2 | 1 | 1 | 1 | 2 | 2 |
| | 6 Months | 1 Day | 1 | 0 | 1 | 1 | 1 | 0 |
| | | 3 Days | 2 | 0 | 1 | 1 | 2 | 0 |
| | | 5 Days | 2 | 1 | 1 | 1 | 2 | 0 |
| | | 7 Days | 2 | 1 | 1 | 1 | 3 | 2 |
| | 9 Months | 1 Day | 2 | 1 | 1 | 1 | 2 | 0 |
| | | 3 Days | 2 | 1 | 2 | 1 | 2 | 0 |
| | | 5 Days | 2 | 2 | 2 | 2 | 3 | 1 |
| | | 7 Days | 2 | 2 | 2 | 2 | 3 | 3 |
| | 12 Months | 1 Day | 3 | 1 | 1 | 1 | 3 | 0 |
| | | 3 Days | 3 | 2 | 2 | 1 | 3 | 0 |
| | | 5 Days | 3 | 2 | 2 | 2 | 3 | 2 |
| | | 7 Days | 3 | 2 | 2 | 2 | 3 | 3 |

(Table 5-6: Static antifouling data)

| | | | Comp. Ex. | | | | | Ref. Ex. |
|---|---|---|---|---|---|---|---|---|
| | | | 1 | 2 | 3 | 4 | 5 | 6 |
| Static antifouling test | Immersion periods | 1 Month | 0 | 0.5 | 0 | 0 | 0 | 0 |
| | | 3 Months | 0 | 1 | 0 | 0 | 0 | 0 |
| | | 6 Months | 0 | 1 | 0 | 0 | 0 | 0 |
| | | 9 Months | 0 | 2 | 0 | 0 | 0 | 0 |
| | | 12 Months | 0 | 3 | 0 | 0 | 0 | 0 |

(Table 6)

| Names | Manufacturers | Properties | Solid content (mass%) |
|---|---|---|---|
| LoLo Tint 97 | AMERICAN CHEMET Co. | Cuprous oxide (A) (average particle size 17.7 μm) | 100 |
| Purple Copp | AMERICAN CHEMET Co. | Cuprous oxide (B) (average particle size 11.6 μm) | 100 |
| Red Copp 97N Premium | AMERICAN CHEMET Co. | Cuprous oxide (C) (average particle size 4.8 μm) | 100 |
| NC-803 | NISSIN CHEMCO LTD. | Cuprous oxide (D) (average particle size 9.9 μm) | 100 |
| NC-301 | NISSIN CHEMCO LTD. | Cuprous oxide (E) (average particle size 3.2 μm) | 100 |
| Talc FC-1 | Fukuoka Talc Co., LTD. | Extender pigment | 100 |
| Zinc flower No. 3 (zinc oxide) | Kyushu Hakusui Kagaku K.K. | Extender pigment | 100 |
| Red iron oxide No. 404 | MORISHITA BENGARA KOGYO CO., LTD. | Inorganic color pigment | 100 |
| Copper Omadine (copper pyrithione) | Arch Chemical, Inc. | Organic antifouling agent | 100 |
| Rosin | China | Elution accelerator | 100 |
| Ethyl Silicate 28 | COLCOAT CO., LTD. | Dehydrating agent | 97 |
| DISPARLON A630-20X | Kusumoto Chemicals, Ltd. | Anti-sagging agent | 20 |
| DISPARLON 4200-20 | Kusumoto Chemicals, Ltd. | Anti-settling agent | 20 |
| Titanium white R-5N | SAKAI CHEMICAL INDUSTRY CO., LTD. | Color pigment | 100 |
| Versatic acid | Resolution Netherlands | Elution accelerator | 100 |

[Method for measuring average particle size of cuprous oxide]

The average particle sizes of the cuprous oxides (A) to (E) were measured by a laser diffraction scattering method using SALD-2200 (manufactured by Shimadzu Corporation).

The analysis method is described below.

(1) A 0.2 wt% HMPNa (sodium hexametaphosphate) solution and a few droplets of a neutral detergent were added to the sample dispersing device of SALD-2200. The ultrasonic wave applicator was actuated. The mixture was circulated at a pump speed of 7.
(2) Approximately 100 mg of the cuprous oxide was placed into a mortar. A few droplets of a neutral detergent were added and were lightly dispersed to disintegrate the secondary aggregation of the pigment.
(3) Water was added to the sample dispersed in the mortar while avoiding the generation of bubbles, and the mixture was poured into the sample dispersing device.
(4) The mixture was circulated and dispersed inside the dispersing device for 10 minutes, and was thereafter subjected to the measurement of grain size distribution.
(5) The refractive index used in the calculation of grain size distribution was "2.70 - 0.20i", and the median diameter in the grain size distribution was adopted as the average particle size.

The particle sizes (μm) and relative amounts (%) of particles of the cuprous oxides (A) to (E), and relationships thereof with the grain size distribution are illustrated in Figs. 1 to 5, respectively.

〈Evaluation of characteristics〉

(1) Content of thermal residues in hydrolyzable copolymer solution

The (co) polymer solution weighing 1.5 g ($X_1$ (g)) was held in a thermostatic chamber at 1 atm and 108°C for 3 hours to remove volatile components, and thereby thermal residues (nonvolatile components) were obtained. Next, the mass ($X_2$ (g)) of the thermal residues (nonvolatile components) was measured. The content (%) of the thermal residues in the hydrolyzable copolymer solution was calculated using the following equation.

$$\text{Content (\%) of thermal residues} = X_2/X_1 \times 100$$

(2) Average molecular weight of hydrolyzable copolymer

The weight average molecular weight (Mw) of the hydrolyzable copolymers was measured by GPC (gel permeation chromatography) under the following conditions.

(GPC conditions)

Chromatograph: "HLC-8120GPC" (manufactured by TOSOH CORPORATION)
Columns: "SuperH2000 + H4000" (manufactured by TOSOH CORPORATION, 6 mm (inner diameter), each 15 cm (length))
Eluent: tetrahydrofuran (THF)
Flow rate: 0.500 ml/min
Detector: RI
Column oven temperature: 40°C
Standard substance: polystyrene
Sample preparation: The hydrolyzable copolymer solutions prepared in Production Examples were each dehydrated by the addition of a small amount of calcium chloride and filtered through a membrane filter. The residues thus obtained were used as GPC measurement samples.

(3) Viscosity of hydrolyzable copolymer solution

The viscosity (unit: mPa·s) of the hydrolyzable copolymer solutions was measured at a liquid temperature of 25°C using a cone-plate viscometer (manufactured by TOKI SANGYO CO., LTD.) .

(4) Paint viscosity of antifouling coating composition

The coating compositions prepared as described hereinabove, 1 day after their production, were analyzed with a B-type viscometer (manufacturer: TOKYO KEIKI INC., product name: B-type viscometer, model: BM, detector rotational speed: 60 rpm) to measure the viscosity (initial viscosity (dPa·s)) at 23°C.

(5) Airless coating workability

The coating compositions prepared as described hereinabove, 1 day after their production, were tested by an airless coating process to examine their workability (atomization properties). The workability was evaluated as good "A" or poor "B".

(6) Accelerated Deterioration test of coating film (evaluation of adhesion)

Epoxy paints 1 to 7 (described in Table 7, details of the raw materials used are described in Table 8) were each applied onto a sandblasted plate (150 mm × 70 mm × 1.6 mm) so that the dry thickness would be 150 μm and cured to form a coating film (150 μm). Immediately thereafter, the coated plates were exposed to the outdoor environment with a southern exposure at an angle of 45° to the ground (that is, the test plates were set so that the coated surface was tilted at 45° relative to the ground and was directed to the south).

Next, with use of an applicator, the antifouling coating compositions were each applied onto the test plates (to

the surface of the cured coating film of the epoxy paint) exposed outdoors under the above conditions for 1, 3, 5 and 7 days so that the dry thickness of the coating film would be 100 μm. The wet films were dried at 23°C for 7 days to form antifouling coating films. Test plates with an antifouling coating film were thus fabricated.

(Table 7)

| | | Epoxy paints | | | | | | |
|---|---|---|---|---|---|---|---|---|
| | | 1 | 2 | 3 | 4 | 5 | 6 | 7 |
| Base component | jER 834-90X | 18.9 | | | 18.9 | 17 | | |
| | jER 1001-75X | | 31 | 31 | | 7 | 11 | 11 |
| | jER 828 | | | | | | 13 | 13 |
| | LAROFLEX MP-25 | 3 | 3 | | 2 | 3 | 3 | 3 |
| | EVAFLEX EV40W | | | 3 | | | | |
| | TCP | 3 | | | | 3 | 3 | 3 |
| | DIANAL BR-106 | | | | 1 | | | |
| | Hirenol PL-1000S | | | | 3 | | | |
| | Talc NKK | 30 | 30 | 30 | 30 | | | |
| | Gekko BB | 2 | 2 | 2 | 2 | 2 | 2 | 2 |
| | Alpaste 1900XS | 7 | | | | | | |
| | Mica Powder 100 Mesh | | 7 | 7 | 7 | | | |
| | DISPARLON 6650 | 1.5 | 1.5 | 1.5 | 1.5 | 1 | 0.5 | 0.5 |
| | Barico 300W | | | | | 10 | 15 | 15 |
| | Unisper PG-K10 | | | | | 31.5 | 30 | 30 |
| | Xylene | 15.6 | 11.5 | 11.5 | 15.6 | 8 | 4 | 4 |
| | MIBK (methyl isobutyl ketone) | 2 | 2 | 2 | 2 | 2 | 3 | 3 |
| | Methoxypropanol | 2 | 2 | 2 | 2 | 2 | 2 | 2 |
| | KBM 403 | | | | | 0.5 | 0.5 | 0.5 |
| | Subtotal | 85 | 90 | 90 | 85 | 87 | 87 | 87 |
| Curing agent | LUCKAMIDE TD-966 | 10.5 | 7.7 | 7.7 | 2.1 | 10 | 10 | 9 |
| | ANCAMINE 2074 | | | | 2.1 | | | |
| | Cardolite CM-5055 | | | | | | | 1 |
| | TAP | 0.3 | 0.3 | 0.3 | 0.3 | 0.3 | 0.3 | 0.3 |
| | Xylene | 4.2 | 2 | 2 | 10.5 | 2.7 | 2.7 | 2.7 |
| | Subtotal | 15 | 10 | 10 | 15 | 13 | 13 | 13 |
| Total | | 100 | 100 | 100 | 100 | 100 | 100 | 100 |
| Nonvolatile content of paint (mass%) | | 68 | 72 | 72 | 67 | 78 | 82 | 82 |
| Paint mixing mass ratio<br>Base component:Curing agent | | 85:15 | 90:10 | 90 : 10 | 85:15 | 87:13 | 87:13 | 87:13 |

⟨Table 8⟩

| Names | Manufacturers | Properties | Solid content (mass%) |
|---|---|---|---|
| jER 834-90X | Mitsubishi Chemical Corporation | Bisphenol A-type epoxy resin | 90 |
| jER 1001-75X | Mitsubishi Chemical Corporation | Bisphenol A-type epoxy resin | 75 |
| jER 828 | Mitsubishi Chemical Corporation | Bisphenol A-type epoxy resin | 100 |
| LAROFLEX MP-25 | BASF | Vinyl chloride/vinyl isobutyl ether copolymer | 100 |
| EVAFLEX EV40W | DUPONT-MITSUI POLYCHEMICALS CO., LTD. | Ethylene/vinyl acetate copolymer | 100 |
| TCP | KYOWA HAKKO KOGYO CO., LTD. | Tricresyl phosphate | 100 |
| DIANAL BR-106 | Mitsubishi Rayon Co., Ltd. | Acrylic resin | 100 |
| Hirenol PL-1000S | Kolon Industries, Inc. | Petroleum resin | 100 |
| Talc NKK | FUJI TALC INDUSTRIAL CO., LTD. | Extender pigment: talc | 100 |
| Barico 300W | Hakusui Tech Co., Ltd. | Extender pigment: barium sulfate | 100 |
| Unisper PG-K10 | Sibelco Malaysia | Extender pigment: potassium feldspar | 100 |
| Gekko BB | TODA KOGYO CORP. | Color pigment: red iron oxide | 100 |
| Alpaste 1900XS | TOYO ALUMINIUM K.K. | Anticorrosive pigment | 75 |
| Mica Powder 100 Mesh | Fukuoka Talc Co., LTD. | Anticorrosive pigment | 100 |
| DISPARLON 6650 | Kusumoto Chemicals, Ltd. | Thixotropic agent | 100 |
| KBM 403 | Shin-Etsu Chemical Co., Ltd. | Coupling agent | 100 |
| LUCKAMIDE TD-966 | DIC | Curing agent: polyamidoamine | 60 |
| ANCAMINE 2074 | Air Products and Chemicals, Inc. | Curing agent: modified alicyclic polyamine | 100 |
| Cardolite CM-5055 | Cardolite Corporation | Curing agent: phenalkamine | 70 |
| TAP | Kayaku Akzo Corporation | Curing accelerator | 100 |

The test plates with the antifouling coating film were immersed in artificial seawater at 40°C, and the adhesion was examined every month after the start of immersion based on the evaluation criteria described below.

[Adhesion evaluation]

With an NT cutter, four lines were cut at spacings of 4 mm in each of the vertical direction and the transverse direction on the antifoul-coated face of the test plate, thereby forming nine squares. Cellotape® was press bonded to the coating film surface that had been thus cut and was peeled rapidly, and the squares were observed. The proportion (%) of the area (delamination area) of the squares in which the coating film had been delaminated between the epoxy coating film and the antifouling coating film after the peeling operation was calculated relative to the area of the nine squares as 100%. The adhesion was evaluated based on the evaluation criteria below.

[Adhesion evaluation criteria]

0: The delamination area of the coating film was less than 5%.
1: The delamination area of the coating film was 5 to less than 25%.
2: The delamination area of the coating film was 25 to less than 50%.
3: The delamination area of the coating film was 50% or more.

(7) Static antifouling test

With use of an applicator, sandblasted plates (300 mm × 100 mm × 3.2 mm) were coated with an epoxy-based paint (an epoxy AC paint, trade name "BANNOH 500" manufactured by CHUGOKU MARINE PAINTS, LTD.) so that the dry thickness would be 150 μm. The wet film was cured to form a coating film (150 μm). Next, the epoxy paint 1 (described in Table 7) was applied onto the cured coating film with an applicator so that the dry thickness would be 100 μm. The wet film was cured to form a coating film (100 μm). Test plates were thus fabricated.

Next, the antifouling coating compositions were applied onto the test plates (the surface of the cured coating film of the epoxy paint) with use of an applicator so that the dry thickness would be 150 μm. The wet films were dried at 23°C for 1 day to form antifouling coating films (150 μm). The coating compositions were further applied onto the surface of the antifouling coating films so that the dry thickness would be 150 μm, and the wet films were dried at 23°C for 7 days to form antifouling coating films. Test plates with an antifouling coating film were thus fabricated.

The test plates with the antifouling coating film obtained as described above were immersed offshore Kurahashi-jima island, Hiroshima, Japan, under static conditions. Every month after the start of immersion, the proportion (%) of the area (fouled area) of the antifouling coating film that had been fouled by aquatic organisms was measured relative to the area of the entirety of the antifouling coating film of the test plate as 100%. The static antifouling properties were evaluated based on the evaluation criteria below.

[Evaluation criteria]

0: The fouled area was 0%.
0.5: The fouled area was above 0 and less than 10%.
1: The fouled area was 10 to less than 20%.
2: The fouled area was 20 to less than 30%.
3: The fouled area was 30 to less than 40%.
4: The fouled area was 40 to less than 50%.
5: The fouled area was 50 to 100%.

INDUSTRIAL APPLICABILITY

The antifouling coating compositions of the present invention may be applied to, among others, underwater structures such as water supply inlets and drains in various power plants (thermal power plants and nuclear power plants), and sludge diffusion prevention fences used in various offshore or river engineering works for building structures such as coast roads, submarine tunnels, port facilities, and canals or waterways, ships (in particular, portions from the draft line to the bottom of a ship), and fishery materials (such as ropes, floats and buoys).

## Claims

**1.** An antifouling coating composition comprising

(A) a hydrolyzable copolymer comprising

a structural unit (1) derived from triisopropylsilyl methacrylate (i),
a structural unit (2) derived from 2-methoxyethyl (meth)acrylate (ii), and
a structural unit (3) derived from a polymerizable monomer (iii) having a polymerizable double bond, with the proviso that triisopropylsilyl methacrylate and 2-methoxyethyl (meth)acrylate are excluded,

(B) cuprous oxide having an average particle size as measured according to the method disclosed in the description of 4.5 to 50 μm, and
(C) a rosin and/or a monocarboxylic acid compound,
wherein

the rosin is selected from gum rosin, wood rosin, tall oil rosin, hydrogenated rosins and disproportionated rosins,
the monocarboxylic acid compound is selected from aliphatic or alicyclic monocarboxylic acids,
the ratio (WA/WC) of the content (WA) of the hydrolyzable copolymer (A) to the content (WC) of the rosin and/or the monocarboxylic acid compound (C) is 95/5 to 40/60 by mass,
the hydrolyzable copolymer (A) is present in an amount of 7 to 30 mass% of the content of solids of the antifouling coating composition taken as 100 mass%, and
the antifouling coating composition does not comprise medetomidine .

2. The antifouling coating composition according to Claim 1, further comprising at least one selected from the group consisting of an inorganic copper compound (D) except the cuprous oxide (B), an organic antifouling agent (E), a color pigment (F), an extender pigment (G), a pigment dispersant (H), a plasticizer (I), an anti-sagging agent (J), an anti-settling agent (K), a dehydrating agent (L) and a solvent (M).

3. The antifouling coating composition according to Claim 1 or 2, wherein the content of volatile organic compound (VOC) is less than 400 g/L.

4. An antifouling coating film formed from the antifouling coating composition described in any one of Claims 1 to 3.

5. An antifouling substrate comprising a stack comprising a substrate and the antifouling coating film described in Claim 4.

6. The antifouling substrate according to Claim 5, which is placed in contact with seawater or freshwater.

7. The antifouling substrate according to Claim 5 or 6, wherein the substrate is at least one selected from the group consisting of underwater structures, ships and fishing gears.

8. A method for producing an antifouling substrate, comprising curing the antifouling coating composition described in any one of Claims 1 to 3 on a surface of a substrate to form an antifouling coating film.

9. A method for producing an antifouling coating composition, comprising mixing together

(A) a hydrolyzable copolymer comprising

a structural unit (1) derived from triisopropylsilyl methacrylate (i),
a structural unit (2) derived from 2-methoxyethyl (meth)acrylate (ii), and
a structural unit (3) derived from a polymerizable monomer (iii) having a polymerizable double bond, with the proviso that triisopropylsilyl methacrylate and 2-methoxyethyl (meth)acrylate are excluded,

(B) cuprous oxide having an average particle size as measured according to the method disclosed in the description of 4.5 to 50 μm, and
(C) a rosin and/or a monocarboxylic acid compound, and optionally an additional component,
wherein

the rosin is selected from gum rosin, wood rosin, tall oil rosin, hydrogenated rosins and disproportionated rosins,
the monocarboxylic acid compound is selected from aliphatic or alicyclic monocarboxylic acids,
the ratio (WA/WC) of the content (WA) of the hydrolyzable copolymer (A) to the content (WC) of the rosin and/or the monocarboxylic acid compound (C) in the antifouling coating composition is 95/5 to 40/60 by mass,
the hydrolyzable copolymer (A) is present in an amount of 7 to 30 mass% of the content of solids of the antifouling coating composition taken as 100 mass%, and
the antifouling coating composition does not comprise medetomidine.

**Patentansprüche**

1. Antifouling-Beschichtungszusammensetzung, umfassend

   (A) ein hydrolysierbares Copolymer, umfassend

   eine von Triisopropylsilylmethacrylat (i) abgeleitete Struktureinheit (1),
   eine von 2-Methoxyethyl(meth)acrylat (ii) abgeleitete Struktureinheit (2) und
   eine Struktureinheit (3), die von einem polymerisierbaren Monomer (iii) mit einer polymerisierbaren Doppelbindung abgeleitet ist, mit der Maßgabe, dass Triisopropylsilylmethacrylat und 2-Methoxyethyl(meth)acrylat ausgeschlossen sind,

   (B) Kupfer(I)-oxid mit einer durchschnittlichen Partikelgröße, gemessen gemäß dem in der Beschreibung offenbarten Verfahren, von 4,5 bis 50 μm und
   (C) ein Kolophonium und/oder eine Monocarbonsäureverbindung,
   wobei

   das Kolophonium aus Gummi-Kolophonium, Holz-Kolophonium, Tallöl-Kolophonium, hydriertem Kolophonium und disproportioniertem Kolophonium ausgewählt ist,
   die Monocarbonsäureverbindung aus aliphatischen oder alicyclischen Monocarbonsäuren ausgewählt ist,
   das Verhältnis (WA/WC) des Gehalts (WA) des hydrolysierbaren Copolymers (A) zum Gehalt (WC) des Kolophoniums und/oder der Monocarbonsäureverbindung (C) 95/5 bis 40/60, bezogen auf die Masse, beträgt,
   das hydrolysierbare Copolymer (A) in einer Menge von 7 bis 30 Masse-% des Gehalts der Feststoffe der Antifouling-Beschichtungszusammensetzung, angenommen als 100 Masse-%, vorliegt und
   die Antifouling-Beschichtungszusammensetzung kein Medetomidin umfasst.

2. Antifouling-Beschichtungszusammensetzung gemäß Anspruch 1, ferner umfassend mindestens eines, ausgewählt aus der Gruppe, bestehend aus einer anorganischen Kupferverbindung (D) außer dem Kupfer(I)-oxid (B), einem organischen Antifoulingmittel (E), einem Farbpigment (F), ein Extenderpigment (G), einem PigmentDispergiermittel (H), einem Weichmacher (I), einem Antiablaufmittel (J), einem Antiabsetzmittel (K), einem Dehydratisierungsmittel (L) und einem Lösungsmittel (M).

3. Antifouling-Beschichtungszusammensetzung gemäß Anspruch 1 oder 2, wobei der Gehalt an flüchtigen organischen Verbindungen (VOC) weniger als 400 g/L beträgt.

4. Antifouling-Beschichtungsfilm, der aus der in gemäß einem der Ansprüche 1 bis 3 beschriebenen Antifouling-Beschichtungszusammensetzung gebildet ist.

5. Antifouling-Substrat, umfassend einen Stapel, umfassend ein Substrat und den in Anspruch 4 beschriebenen Antifouling-Beschichtungsfilm.

6. Antifouling-Substrat gemäß Anspruch 5, das in Kontakt mit Meerwasser oder Süßwasser gebracht wird.

7. Antifouling-Substrat gemäß Anspruch 5 oder 6, wobei das Substrat mindestens eines, ausgewählt aus der Gruppe, bestehend aus Unterwasserstrukturen, Schiffen und Fischereiausrüstung, ist.

8. Verfahren zur Herstellung eines Antifouling-Substrats, umfassend das Härten der in einem der Ansprüche 1 bis 3 beschriebenen Antifouling-Beschichtungszusammensetzung auf einer Oberfläche eines Substrats zur Bildung eines Antifouling-Beschichtungsfilms.

9. Verfahren zur Herstellung einer Antifouling-Beschichtungszusammensetzung, umfassend das Vermischen von

   (A) einem hydrolysierbaren Copolymer, umfassend

   eine von Triisopropylsilylmethacrylat (i) abgeleitete Struktureinheit (1),
   eine von 2-Methoxyethyl(meth)acrylat (ii) abgeleitete Struktureinheit (2) und
   eine Struktureinheit (3), die von einem polymerisierbaren Monomer (iii) mit einer polymerisierbaren Doppelbindung abgeleitet ist, mit der Maßgabe, dass Triisopropylsilylmethacrylat und 2-Methoxyethyl(meth)acrylat ausgeschlossen sind,

(B) Kupfer(I)-oxid mit einer durchschnittlichen Partikelgröße, gemessen gemäß dem in der Beschreibung offenbarten Verfahren, von 4,5 bis 50 μm und
(C) einem Kolophonium und/oder einer Monocarbonsäureverbindung,
wobei
das Kolophonium aus Gummi-Kolophonium, Holz-Kolophonium, Tallöl-Kolophonium, hydriertem Kolophonium und disproportioniertem Kolophonium ausgewählt ist,

die Monocarbonsäureverbindung aus aliphatischen oder alicyclischen Monocarbonsäuren ausgewählt ist,
das Verhältnis (WA/WC) des Gehalts (WA) des hydrolysierbaren Copolymers (A) zum Gehalt (WC) des Kolophoniums und/oder der Monocarbonsäureverbindung (C) 95/5 bis 40/60, bezogen auf die Masse, beträgt,
das hydrolysierbare Copolymer (A) in einer Menge von 7 bis 30 Masse-% des Gehalts der Feststoffe der Antifouling-Beschichtungszusammensetzung, angenommen als 100 Masse-%, vorliegt und
die Antifouling-Beschichtungszusammensetzung kein Medetomidin umfasst.

## Revendications

**1.** Composition de revêtement antisalissure comprenant

(A) un copolymère hydrolysable comprenant

un motif structural (1) dérivé de méthacrylate de triisopropylsilyle (i),
un motif structural (2) dérivé de (méth)acrylate de 2-méthoxyéthyle (ii), et
un motif structural (3) dérivé d'un monomère polymérisable (iii) présentant une double liaison polymérisable, à condition que le méthacrylate de triisopropylsilyle et le (méth)acrylate de 2-méthoxyéthyle soient exclus,

(B) un oxyde cuivreux présentant un taille particulaire moyenne, telle que mesurée selon le procédé divulgué dans la description, de 4,5 à 50 μm, et
(C) une colophane et/ou un composé d'acide monocarboxylique,
dans laquelle

la colophane est sélectionnée parmi une colophane de gomme, une colophane de bois, une colophane d'huile de pin, des colophanes hydrogénées et des colophanes dismutées, le composé d'acide monocarboxylique est sélectionné parmi des acides monocarboxyliques aliphatiques ou alicycliques,
le rapport (WA/WC) de la teneur (WA) du copolymère hydrolysable (A) sur la teneur (WC) de la colophane et/ou du composé d'acide monocarboxylique (C) est de 95/5 à 40/60 en masse,
le copolymère hydrolysable (A) est présent en une quantité de 7 à 30 % en masse de la teneur en solides de la composition de revêtement antisalissure considérée comme de 100 % en masse, et
la composition de revêtement antisalissure ne comprend pas de médétomidine.

**2.** Composition de revêtement antisalissure selon la revendication 1, comprenant en outre au moins un sélectionné dans le groupe consistant en un composé de cuivre inorganique (D) à l'exception de l'oxyde cuivreux (B), un agent antisalissure organique (E), un pigment de couleur (F), un pigment de charge (G), un dispersant de pigment (H), un plastifiant (I), un agent anticoulures (J), un agent antisédimentation (K), un agent déshydratant (L) et un solvant (M).

**3.** Composition de revêtement antisalissure selon la revendication 1 ou 2, dans laquelle la teneur en composé organique volatil (COV) est inférieure à 400 g/l.

**4.** Film de revêtement antisalissure formé à partir de la composition de revêtement antisalissure décrite dans l'une quelconque des revendications 1 à 3.

**5.** Substrat antisalissure comprenant un empilement comprenant un substrat et le film de revêtement antisalissure décrit dans la revendication 4.

**6.** Substrat antisalissure selon la revendication 5, qui est placé en contact avec de l'eau de mer ou de l'eau douce.

**7.** Substrat antisalissure selon la revendication 5 ou 6, dans lequel le substrat est au moins l'un sélectionné dans le groupe consistant en structures sous-marines, navires et engins de pêche.

**8.** Procédé de production d'un substrat antisalissure, comprenant le durcissement de la composition de revêtement antisalissure décrite dans l'une quelconque des revendications 1 à 3 sur une surface d'un substrat pour former un film de revêtement antisalissure.

**9.** Procédé de production d'une composition de revêtement antisalissure, comprenant le mélange

(A) d'un copolymère hydrolysable comprenant

un motif de structure (1) dérivé de méthacrylate de triisopropylsilyle (i),
un motif de structure (2) dérivé de (méth)acrylate de 2-méthoxyéthyle (ii), et
un motif structural (3) dérivé d'un monomère polymérisable (iii) présentant une double liaison polymérisable,
à condition que le méthacrylate de triisopropylsilyle et le (méth)acrylate de 2-méthoxyéthyle soient exclus,

(B) d'un oxyde cuivreux présentant un taille particulaire moyenne, telle que mesurée selon le procédé divulgué dans la description, de 4,5 à 50 μm, et
(C) d'une colophane et/ou d'un composé d'acide monocarboxylique, et facultativement d'un composant supplémentaire,
dans lequel

la colophane est sélectionnée parmi une colophane de gomme, une colophane de bois, une colophane d'huile de pin, des colophanes hydrogénées et des colophanes dismutées,
le composé d'acide monocarboxylique est sélectionné parmi des acides monocarboxyliques aliphatiques ou alicycliques,
le rapport (WA/WC) de la teneur (WA) du copolymère hydrolysable (A) sur la teneur (WC) de la colophane et/ou du composé d'acide monocarboxylique (C) dans la composition de revêtement antisalissure est de 95/5 à 40/60 en masse,
le copolymère hydrolysable (A) est présent en une quantité de 7 à 30 % en masse de la teneur en solides de la composition de revêtement antisalissure considérée comme de 100 % en masse, et
la composition de revêtement antisalissure ne comprend pas de médétomidine.

FIGURE 1

| RI =2.70 - 0.20i | MED. DIAM.: 17.685<br>MODE DIAM.: 17.222 | AVE.: 17.353<br>SD: 0.124 | 40.0%D : 16.364<br>60.0%D : 19.112<br>80.0%D : 22.452 | S LEVEL: 0<br>DISTR. FCTN.: NONE<br>D SHIFT: 0 |
|---|---|---|---|---|

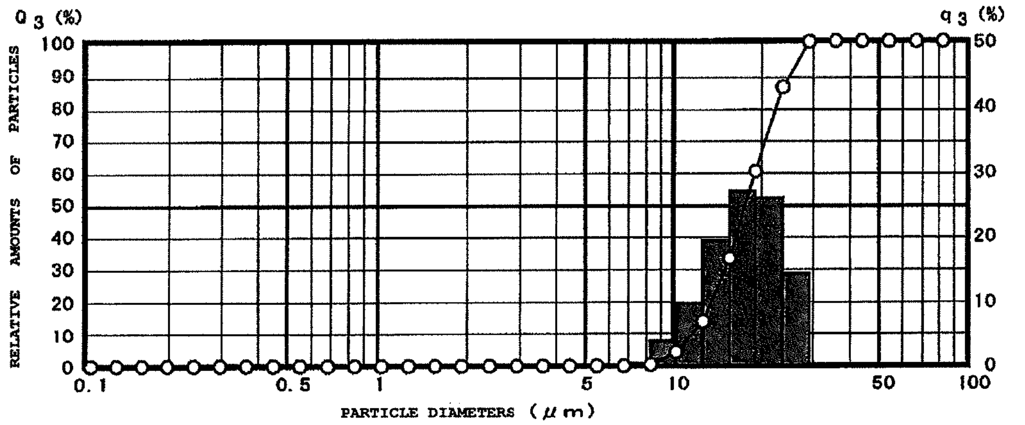


| | PART. DIAM. x(μm) | INTEG. VAL. Q3(%) | DIFF. VAL. q3(%) | | PART. DIAM. x(μm) | INTEG. VAL. Q3(%) | DIFF. VAL. q3(%) | | PART. DIAM. x(μm) | INTEG. VAL. Q3(%) | DIFF. VAL. q3(%) |
|---|---|---|---|---|---|---|---|---|---|---|---|
| 1 | 1000.000 | 100.000 | 0.000 | 18 | 28.988 | 99.957 | 14.095 | 35 | 0.840 | 0.000 | 0.000 |
| 2 | 811.975 | 100.000 | 0.000 | 19 | 23.538 | 85.862 | 25.863 | 36 | 0.682 | 0.000 | 0.000 |
| 3 | 659.303 | 100.000 | 0.000 | 20 | 19.112 | 59.999 | 26.838 | 37 | 0.554 | 0.000 | 0.000 |
| 4 | 535.337 | 100.000 | 0.000 | 21 | 15.519 | 33.161 | 19.289 | 38 | 0.450 | 0.000 | 0.000 |
| 5 | 434.680 | 100.000 | 0.000 | 22 | 12.601 | 13.872 | 9.612 | 39 | 0.365 | 0.000 | 0.000 |
| 6 | 352.949 | 100.000 | 0.000 | 23 | 10.231 | 4.260 | 3.846 | 40 | 0.297 | 0.000 | 0.000 |
| 7 | 286.586 | 100.000 | 0.000 | 24 | 8.308 | 0.415 | 0.415 | 41 | 0.241 | 0.000 | 0.000 |
| 8 | 232.700 | 100.000 | 0.000 | 25 | 6.746 | 0.000 | 0.000 | 42 | 0.196 | 0.000 | 0.000 |
| 9 | 188.947 | 100.000 | 0.000 | 26 | 5.477 | 0.000 | 0.000 | 43 | 0.159 | 0.000 | 0.000 |
| 10 | 153.420 | 100.000 | 0.000 | 27 | 4.447 | 0.000 | 0.000 | 44 | 0.129 | 0.000 | 0.000 |
| 11 | 124.573 | 100.000 | 0.000 | 28 | 3.611 | 0.000 | 0.000 | 45 | 0.105 | 0.000 | 0.000 |
| 12 | 101.150 | 100.000 | 0.000 | 29 | 2.932 | 0.000 | 0.000 | 46 | 0.085 | 0.000 | 0.000 |
| 13 | 82.131 | 100.000 | 0.000 | 30 | 2.381 | 0.000 | 0.000 | 47 | 0.069 | 0.000 | 0.000 |
| 14 | 66.689 | 100.000 | 0.000 | 31 | 1.933 | 0.000 | 0.000 | 48 | 0.056 | 0.000 | 0.000 |
| 15 | 54.149 | 100.000 | 0.000 | 32 | 1.570 | 0.000 | 0.000 | 49 | 0.046 | 0.000 | 0.000 |
| 16 | 43.968 | 100.000 | 0.000 | 33 | 1.275 | 0.000 | 0.000 | 50 | 0.037 | 0.000 | 0.000 |
| 17 | 35.701 | 100.000 | 0.043 | 34 | 1.035 | 0.000 | 0.000 | 51 | 0.030 | 0.000 | 0.000 |

FIGURE 2

| RI =2.70 − 0.20i | MED. DIAM.: 11.632<br>MODE DIAM.: 17.222 | AVE.: 8.601<br>SD: 0.442 | 40.0%D : 8.947<br>60.0%D : 14.094<br>80.0%D : 18.999 | S LEVEL: 0<br>DISTR. FCTN.: NONE<br>D SHIFT: 0 |
|---|---|---|---|---|

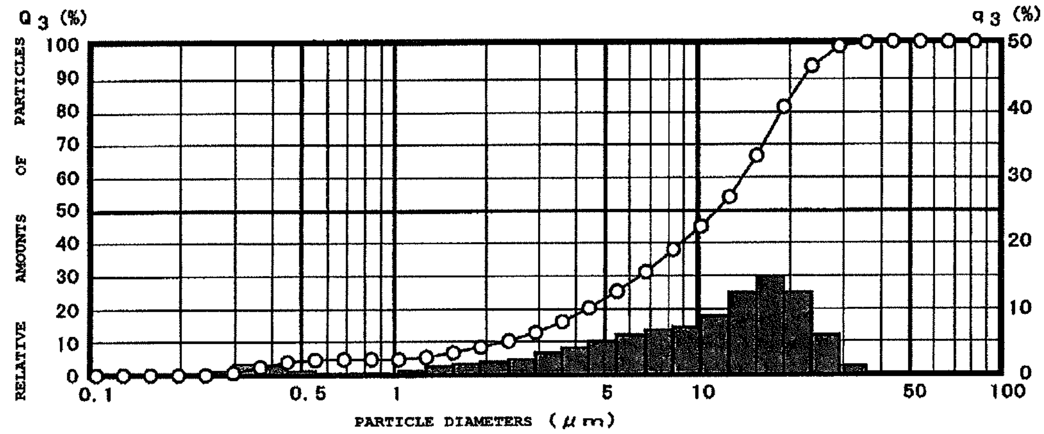


| | PART. DIAM. x(μm) | INTEG. VAL. Q3(%) | DIFF. VAL. q3(%) | | PART. DIAM. x(μm) | INTEG. VAL. Q3(%) | DIFF. VAL. q3(%) | | PART. DIAM. x(μm) | INTEG. VAL. Q3(%) | DIFF. VAL. q3(%) |
|---|---|---|---|---|---|---|---|---|---|---|---|
| 1 | 1000.000 | 100.000 | 0.000 | 18 | 28.988 | 98.687 | 5.972 | 35 | 0.840 | 4.663 | 0.016 |
| 2 | 811.975 | 100.000 | 0.000 | 19 | 23.538 | 92.715 | 12.295 | 36 | 0.682 | 4.647 | 0.113 |
| 3 | 659.303 | 100.000 | 0.000 | 20 | 19.112 | 80.420 | 14.732 | 37 | 0.554 | 4.534 | 0.629 |
| 4 | 535.337 | 100.000 | 0.000 | 21 | 15.519 | 65.688 | 12.308 | 38 | 0.450 | 3.905 | 1.495 |
| 5 | 434.680 | 100.000 | 0.000 | 22 | 12.601 | 53.380 | 8.802 | 39 | 0.365 | 2.410 | 1.676 |
| 6 | 352.949 | 100.000 | 0.000 | 23 | 10.231 | 44.578 | 7.110 | 40 | 0.297 | 0.734 | 0.646 |
| 7 | 286.586 | 100.000 | 0.000 | 24 | 8.308 | 37.468 | 6.598 | 41 | 0.241 | 0.088 | 0.085 |
| 8 | 232.700 | 100.000 | 0.000 | 25 | 6.746 | 30.870 | 5.912 | 42 | 0.196 | 0.003 | 0.003 |
| 9 | 188.947 | 100.000 | 0.000 | 26 | 5.477 | 24.958 | 4.966 | 43 | 0.159 | 0.000 | 0.000 |
| 10 | 153.420 | 100.000 | 0.000 | 27 | 4.447 | 19.992 | 4.140 | 44 | 0.129 | 0.000 | 0.000 |
| 11 | 124.573 | 100.000 | 0.000 | 28 | 3.611 | 15.852 | 3.285 | 45 | 0.105 | 0.000 | 0.000 |
| 12 | 101.150 | 100.000 | 0.000 | 29 | 2.932 | 12.567 | 2.337 | 46 | 0.085 | 0.000 | 0.000 |
| 13 | 82.131 | 100.000 | 0.000 | 30 | 2.381 | 10.229 | 1.863 | 47 | 0.069 | 0.000 | 0.000 |
| 14 | 66.689 | 100.000 | 0.000 | 31 | 1.933 | 8.367 | 1.717 | 48 | 0.056 | 0.000 | 0.000 |
| 15 | 54.149 | 100.000 | 0.000 | 32 | 1.570 | 6.650 | 1.300 | 49 | 0.046 | 0.000 | 0.000 |
| 16 | 43.968 | 100.000 | 0.058 | 33 | 1.275 | 5.349 | 0.567 | 50 | 0.037 | 0.000 | 0.000 |
| 17 | 35.701 | 99.942 | 1.256 | 34 | 1.035 | 4.783 | 0.120 | 51 | 0.030 | 0.000 | 0.000 |

FIGURE 3

| RI | MED. DIAM.: / MODE DIAM.: | AVE.: / SD: | %D | S LEVEL / DISTR. FCTN. / D SHIFT |
|---|---|---|---|---|
| =2.70 - 0.20i | MED. DIAM.: 4.797 | AVE.: 4.100 | 40.0%D : 3.936 | S LEVEL: 0 |
| | MODE DIAM.: 7.486 | SD: 0.359 | 60.0%D : 5.745 | DISTR. FCTN.: NONE |
| | | | 80.0%D : 8.080 | D SHIFT: 0 |

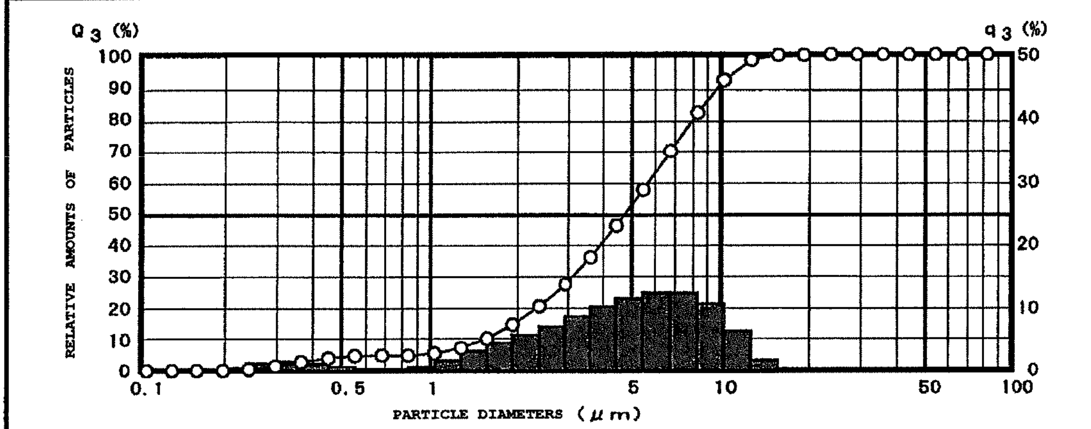


| | PART. DIAM. x(μm) | INTEG. VAL. Q3(%) | DIFF. VAL. q3(%) | | PART. DIAM. x(μm) | INTEG. VAL. Q3(%) | DIFF. VAL. q3(%) | | PART. DIAM. x(μm) | INTEG. VAL. Q3(%) | DIFF. VAL. q3(%) |
|---|---|---|---|---|---|---|---|---|---|---|---|
| 1 | 1000.000 | 100.000 | 0.000 | 18 | 28.988 | 100.000 | 0.000 | 35 | 0.840 | 5.006 | 0.114 |
| 2 | 811.975 | 100.000 | 0.000 | 19 | 23.538 | 100.000 | 0.002 | 36 | 0.682 | 4.892 | 0.211 |
| 3 | 659.303 | 100.000 | 0.000 | 20 | 19.112 | 99.998 | 0.136 | 37 | 0.554 | 4.681 | 0.656 |
| 4 | 535.337 | 100.000 | 0.000 | 21 | 15.519 | 99.862 | 1.583 | 38 | 0.450 | 4.026 | 1.135 |
| 5 | 434.680 | 100.000 | 0.000 | 22 | 12.601 | 98.279 | 6.206 | 39 | 0.365 | 2.891 | 1.374 |
| 6 | 352.949 | 100.000 | 0.000 | 23 | 10.231 | 92.074 | 10.438 | 40 | 0.297 | 1.516 | 1.066 |
| 7 | 286.586 | 100.000 | 0.000 | 24 | 8.308 | 81.635 | 12.234 | 41 | 0.241 | 0.451 | 0.399 |
| 8 | 232.700 | 100.000 | 0.000 | 25 | 6.746 | 69.401 | 12.198 | 42 | 0.196 | 0.052 | 0.052 |
| 9 | 188.947 | 100.000 | 0.000 | 26 | 5.477 | 57.203 | 11.306 | 43 | 0.159 | 0.000 | 0.000 |
| 10 | 153.420 | 100.000 | 0.000 | 27 | 4.447 | 45.897 | 10.060 | 44 | 0.129 | 0.000 | 0.000 |
| 11 | 124.573 | 100.000 | 0.000 | 28 | 3.611 | 35.837 | 8.525 | 45 | 0.105 | 0.000 | 0.000 |
| 12 | 101.150 | 100.000 | 0.000 | 29 | 2.932 | 27.312 | 6.999 | 46 | 0.085 | 0.000 | 0.000 |
| 13 | 82.131 | 100.000 | 0.000 | 30 | 2.381 | 20.313 | 5.672 | 47 | 0.069 | 0.000 | 0.000 |
| 14 | 66.689 | 100.000 | 0.000 | 31 | 1.933 | 14.641 | 4.410 | 48 | 0.056 | 0.000 | 0.000 |
| 15 | 54.149 | 100.000 | 0.000 | 32 | 1.570 | 10.231 | 3.023 | 49 | 0.046 | 0.000 | 0.000 |
| 16 | 43.968 | 100.000 | 0.000 | 33 | 1.275 | 7.208 | 1.627 | 50 | 0.037 | 0.000 | 0.000 |
| 17 | 35.701 | 100.000 | 0.000 | 34 | 1.035 | 5.582 | 0.575 | 51 | 0.030 | 0.000 | 0.000 |

FIGURE 4

| RI =2.70 − 0.20i | MED. DIAM.: 9.853<br>MODE DIAM.: 13.984 | AVE.: 8.627<br>SD: 0.306 | 40.0%D : 8.323<br>60.0%D : 11.498<br>80.0%D : 15.379 | S LEVEL: 0<br>DISTR. FCTN.: NONE<br>D SHIFT: 0 |
|---|---|---|---|---|

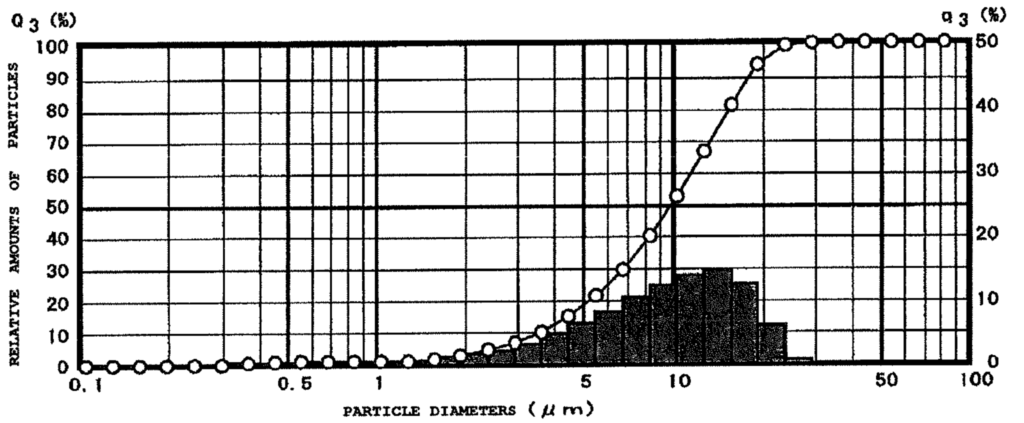


| | PART. DIAM. x(μm) | INTEG. VAL. Q3(%) | DIFF. VAL. q3(%) | | PART. DIAM. x(μm) | INTEG. VAL. Q3(%) | DIFF. VAL. q3(%) | | PART. DIAM. x(μm) | INTEG. VAL. Q3(%) | DIFF. VAL. q3(%) |
|---|---|---|---|---|---|---|---|---|---|---|---|
| 1 | 1000.000 | 100.000 | 0.000 | 18 | 28.988 | 99.997 | 0.794 | 35 | 0.840 | 1.212 | 0.000 |
| 2 | 811.975 | 100.000 | 0.000 | 19 | 23.538 | 99.203 | 6.078 | 36 | 0.682 | 1.212 | 0.004 |
| 3 | 659.303 | 100.000 | 0.000 | 20 | 19.112 | 93.125 | 12.493 | 37 | 0.554 | 1.208 | 0.073 |
| 4 | 535.337 | 100.000 | 0.000 | 21 | 15.519 | 80.632 | 14.536 | 38 | 0.450 | 1.135 | 0.385 |
| 5 | 434.680 | 100.000 | 0.000 | 22 | 12.601 | 66.096 | 13.864 | 39 | 0.365 | 0.750 | 0.578 |
| 6 | 352.949 | 100.000 | 0.000 | 23 | 10.231 | 52.231 | 12.342 | 40 | 0.297 | 0.172 | 0.159 |
| 7 | 286.586 | 100.000 | 0.000 | 24 | 8.308 | 39.889 | 10.395 | 41 | 0.241 | 0.013 | 0.013 |
| 8 | 232.700 | 100.000 | 0.000 | 25 | 6.746 | 29.494 | 8.176 | 42 | 0.196 | 0.000 | 0.000 |
| 9 | 188.947 | 100.000 | 0.000 | 26 | 5.477 | 21.318 | 6.297 | 43 | 0.159 | 0.000 | 0.000 |
| 10 | 153.420 | 100.000 | 0.000 | 27 | 4.447 | 15.021 | 4.855 | 44 | 0.129 | 0.000 | 0.000 |
| 11 | 124.573 | 100.000 | 0.000 | 28 | 3.611 | 10.166 | 3.216 | 45 | 0.105 | 0.000 | 0.000 |
| 12 | 101.150 | 100.000 | 0.000 | 29 | 2.932 | 6.950 | 2.149 | 46 | 0.085 | 0.000 | 0.000 |
| 13 | 82.131 | 100.000 | 0.000 | 30 | 2.381 | 4.800 | 1.741 | 47 | 0.069 | 0.000 | 0.000 |
| 14 | 66.689 | 100.000 | 0.000 | 31 | 1.933 | 3.060 | 1.258 | 48 | 0.056 | 0.000 | 0.000 |
| 15 | 54.149 | 100.000 | 0.000 | 32 | 1.570 | 1.801 | 0.525 | 49 | 0.046 | 0.000 | 0.000 |
| 16 | 43.968 | 100.000 | 0.000 | 33 | 1.275 | 1.277 | 0.065 | 50 | 0.037 | 0.000 | 0.000 |
| 17 | 35.701 | 100.000 | 0.003 | 34 | 1.035 | 1.212 | 0.000 | 51 | 0.030 | 0.000 | 0.000 |

FIGURE 5

| | | | | |
|---|---|---|---|---|
| RI =2.70 - 0.20i | MED. DIAM.: 3.177<br>MODE DIAM.: 4.007 | AVE.: 3.030<br>SD: 0.194 | 40.0%D: 2.814<br>60.0%D: 3.565<br>80.0%D: 4.472 | S LEVEL: 0<br>DISTR. FCTN.: NONE<br>D SHIFT: 0 |

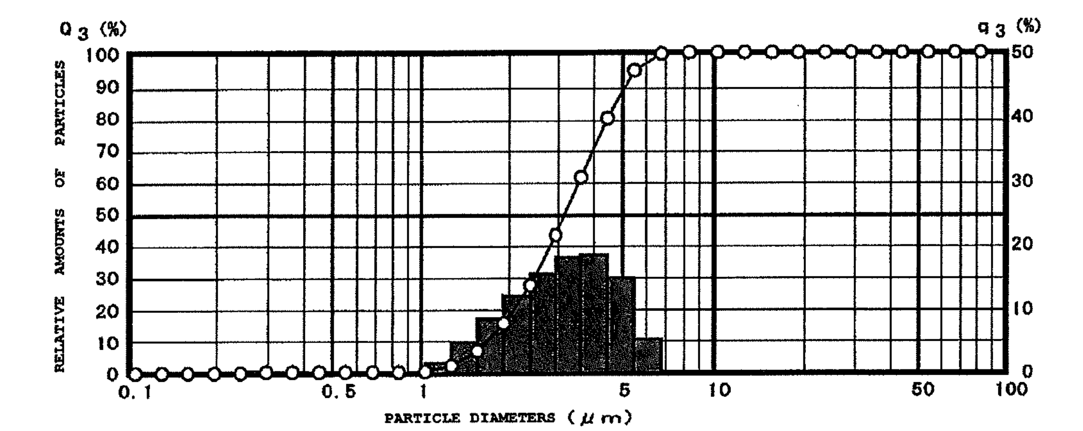


| | PART. DIAM. x(μm) | INTEG. VAL. Q3(%) | DIFF. VAL. q3(%) | | PART. DIAM. x(μm) | INTEG. VAL. Q3(%) | DIFF. VAL. q3(%) | | PART. DIAM. x(μm) | INTEG. VAL. Q3(%) | DIFF. VAL. q3(%) |
|---|---|---|---|---|---|---|---|---|---|---|---|
| 1 | 1000.000 | 100.000 | 0.000 | 18 | 28.988 | 100.000 | 0.000 | 35 | 0.840 | 0.510 | 0.005 |
| 2 | 811.975 | 100.000 | 0.000 | 19 | 23.538 | 100.000 | 0.000 | 36 | 0.682 | 0.505 | 0.000 |
| 3 | 659.303 | 100.000 | 0.000 | 20 | 19.112 | 100.000 | 0.000 | 37 | 0.554 | 0.505 | 0.000 |
| 4 | 535.337 | 100.000 | 0.000 | 21 | 15.519 | 100.000 | 0.000 | 38 | 0.450 | 0.505 | 0.000 |
| 5 | 434.680 | 100.000 | 0.000 | 22 | 12.601 | 100.000 | 0.000 | 39 | 0.365 | 0.505 | 0.015 |
| 6 | 352.949 | 100.000 | 0.000 | 23 | 10.231 | 100.000 | 0.000 | 40 | 0.297 | 0.490 | 0.310 |
| 7 | 286.586 | 100.000 | 0.000 | 24 | 8.308 | 100.000 | 0.211 | 41 | 0.241 | 0.180 | 0.174 |
| 8 | 232.700 | 100.000 | 0.000 | 25 | 6.746 | 99.789 | 5.295 | 42 | 0.196 | 0.006 | 0.006 |
| 9 | 188.947 | 100.000 | 0.000 | 26 | 5.477 | 94.494 | 14.881 | 43 | 0.159 | 0.000 | 0.000 |
| 10 | 153.420 | 100.000 | 0.000 | 27 | 4.447 | 79.613 | 18.497 | 44 | 0.129 | 0.000 | 0.000 |
| 11 | 124.573 | 100.000 | 0.000 | 28 | 3.611 | 61.116 | 18.063 | 45 | 0.105 | 0.000 | 0.000 |
| 12 | 101.150 | 100.000 | 0.000 | 29 | 2.932 | 43.052 | 15.451 | 46 | 0.085 | 0.000 | 0.000 |
| 13 | 82.131 | 100.000 | 0.000 | 30 | 2.381 | 27.602 | 12.054 | 47 | 0.069 | 0.000 | 0.000 |
| 14 | 66.689 | 100.000 | 0.000 | 31 | 1.933 | 15.548 | 8.416 | 48 | 0.056 | 0.000 | 0.000 |
| 15 | 54.149 | 100.000 | 0.000 | 32 | 1.570 | 7.132 | 4.774 | 49 | 0.046 | 0.000 | 0.000 |
| 16 | 43.968 | 100.000 | 0.000 | 33 | 1.275 | 2.358 | 1.685 | 50 | 0.037 | 0.000 | 0.000 |
| 17 | 35.701 | 100.000 | 0.000 | 34 | 1.036 | 0.673 | 0.163 | 51 | 0.030 | 0.000 | 0.000 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11333374 A
- JP 2011026357 A
- JP 2010144106 A
- JP 2000234072 A
- WO 201307580 A
- WO 2009031509 A
- JP 2009513736 A
- EP 2161316 A1
- US 6458878 B1
- EP 3299427 A1
- WO 2014175140 A1
- JP 2005082725 A
- JP 2001151830 A